(19)

Europäisches
Patentamt
European
Patent Office
Office européen
des brevets

(11) **EP 4 733 364 A1**

(12) **EUROPEAN PATENT APPLICATION**
published in accordance with Art. 153(4) EPC

(43) Date of publication:
**29.04.2026 Bulletin 2026/18**

(21) Application number: **24825991.3**

(22) Date of filing: **20.06.2024**

(51) International Patent Classification (IPC):
**C09J 7/38** (2018.01)       **C09J 123/26** (2006.01)
**C09J 133/04** (2006.01)

(52) Cooperative Patent Classification (CPC):
**C09J 7/38; C09J 123/26; C09J 133/04**

(86) International application number:
**PCT/JP2024/022465**

(87) International publication number:
**WO 2024/262590 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.06.2023 JP 2023101845**

(71) Applicant: **Toagosei Co., Ltd.**
**Minato-ku**
**Tokyo 105-8419 (JP)**

(72) Inventors:
• **OTSUKA, Shinya**
**Tokyo 105-8419 (JP)**
• **YAMASHITA, Mitsuki**
**Tokyo 105-8419 (JP)**
• **HASHIMOTO, Yusuke**
**Tokyo 105-8419 (JP)**
• **KONDO, Takahiro**
**Tokyo 105-8419 (JP)**
• **TAKAGI, Akira**
**Tokyo 105-8419 (JP)**
• **OBATA, Masato**
**Tokyo 105-8419 (JP)**
• **ISHIHARA, Toshihisa**
**Tokyo 105-8419 (JP)**

(74) Representative: **TBK**
**Bavariaring 4-6**
**80336 München (DE)**

(54) **ADHESIVE SHEET, ADHESIVE COMPOSITION, AND DECORATIVE MOLDED BODY**

(57)    An adhesive sheet having an adhesive layer is provided, where the adhesive layer contains an acrylic adhesive polymer and a modified polymer which is at least one species selected from the group consisting of a modified polyolefin and a modified polydiene, and the acrylic adhesive polymer and the modified polymer have undergone phase separation in a surface layer portion of the adhesive layer. Also an adhesive composition which comprises an acrylic adhesive polymer, a modified polymer and a solvent is provided, where phase separation into the acrylic adhesive polymer and the modified polymer occurs in the course of forming the adhesive layer on a substrate by applying the adhesive composition onto the substrate and removing the solvent.

[Figure 1]

## Description

Technical Field

[Cross-Reference to Related Applications]

The present application claims a priority from Japanese Patent Application No. 2023-101845 filed on June 21, 2023, the entirety of the disclosure of which is incorporated herein by reference.

The present disclosure relates to an adhesive sheet, to an adhesive composition, and to a decorative molded body. More particularly, the disclosure relates to a technique for enhancing adhesion performance of an acrylic adhesive to a low-polar material.

Background Art

Acrylic adhesives are processed into products such as tapes and labels, and such products find a wide variety of uses. Such acrylic adhesives are applied to various target objects, such as various materials including plastics, paper, metal, glass, and ceramics. In recent years, for achieving enhanced designing performance, reduction of volatile organic compounds (VOCs), etc., a decorative film is stuck onto or transferred to molded articles mainly in the fields of automobile exterior parts, household electric appliances, etc. As a molding method employing a decorative film, there have been employed in-mold forming by injection, vacuum molding, vacuum press forming, and the like. Also, a decorative film having an adhesive layer is known as a decorative film to be stuck onto a molded article.

Generally, an adhesive agent is required to exhibit high adhesion performance to an object to be attached. From another aspect, difficulty is generally encountered in adhesion of an acrylic adhesive to a low-polar material such as polypropylene. Thus, a variety of techniques have conventionally been proposed for improving adhesion performance of an acrylic adhesive to a low-polar material (see, for example, Patent Document 1). Patent Document 1 discloses an adhesive sheet having a layer containing a modified polyolefin on at least one surface of an adhesive layer formed from an adhesive composition.

Prior Art Documents

Patent Documents

Patent Document 1: WO2020/004355

Summary of the Invention

Problems to be Solved by the Invention

In consideration of wide uses of an adhesive agent (also referred to simply as an "adhesive"), the agent desirably exhibits high adhesion performance in a wide temperature range. Also, when a molded article is provided with a design by a decorative film, in one mode, the decorative film is stuck onto the molded article while the film is being stretched. The decorative film stuck onto a molded article in a stretched state easily evokes slippage, peeling, floating, etc. from the molded article at high temperature, possibly resulting in failure in appearance in some cases. Thus, the adhesive agent is required to exhibit excellent adhesion performance at both room temperature and high temperature.

The present disclosure has been conceived under such circumstances. Thus, a main object of the disclosure is to provide an adhesive sheet exhibiting excellent adhesion performance at both room temperature and high temperature, and an adhesive composition that can yield the adhesive sheet.

Means for Solving the Problems

The present inventors have conducted extensive studies to solve the aforementioned problems. The inventors have found that the aforementioned problems can be solved by incorporating a particular structure into an acrylic adhesive polymer and one or both of a modified polyolefin and a modified polydiene in the adhesive layer containing the acrylic adhesive polymer, and one or both of a modified polyolefin and a modified polydiene. Specifically, according to the present disclosure, there are provided the following adhesive sheet, adhesive composition, and decorative molded body.

[1] An adhesive sheet having an adhesive layer, wherein the adhesive layer contains an acrylic adhesive polymer and a modified polymer which is at least one species selected from the group consisting of a modified polyolefin and a modified polydiene, and the acrylic adhesive polymer and the modified polymer have undergone phase separation in a surface layer portion of the adhesive layer.

[2] The adhesive sheet as described in [1] above, wherein the modified polymer concentration is higher in the surface layer portion of the adhesive layer than in the entire adhesive layer.

[3] The adhesive sheet as described in [1] or [2] above, wherein the modified polymer concentration of the surface layer portion of the adhesive layer, as determined through X-ray photoelectron spectrometry, is 1.5 times or more the modified polymer concentration of the entire adhesive layer.

[4] The adhesive sheet as described in any of [1] to [3] above, wherein the adhesive layer has a haze of 3.0% or higher when the thickness of the adhesive layer is 50 $\mu$m.

[5] The adhesive sheet as described in any of [1] to [4] above, wherein the modified polymer is at least one species selected from the group consisting of an acid-modified polyolefin, a chlorinated polyolefin, an acid-modified chlorinated polyolefin, an acryl-modified polyolefin, and an acryl-modified chlorinated polyolefin.

[6] The adhesive sheet as described in any of [1] to [5] above, wherein the modified polymer has been modified with at least one species selected from the group consisting of a carboxylic acid, a carboxylic anhydride, and a (meth)acrylate ester.

[7] The adhesive sheet as described in any of [1] to [6] above, wherein the modified polymer has a percent modification of 80% or less.

[8] The adhesive sheet as described in any of [1] to [7] above, wherein the modified polymer has a melting point of 20°C to 130°C.

[9] The adhesive sheet as described in any of [1] to [8] above, which is a decorative film.

[10] An adhesive sheet having an adhesive layer, wherein the adhesive layer contains an acrylic adhesive polymer and a modified polymer which is at least one species selected from the group consisting of a modified polyolefin and a modified polydiene, and the adhesive layer has a haze of 3.0% or higher when the thickness of the adhesive layer is 50 $\mu$m.

[11] An adhesive composition which contains an acrylic adhesive polymer, a modified polymer which is at least one species selected from the group consisting of a modified polyolefin and a modified polydiene, and a solvent, and which is used for forming an adhesive layer, wherein phase separation into the acrylic adhesive polymer and the modified polymer occurs in the course of forming the adhesive layer on a substrate by applying the adhesive composition onto the substrate and removing the solvent.

[12] The adhesive composition as described in [11] above, wherein a surface layer portion of the adhesive layer has a modified polymer concentration higher than the modified polymer concentration of the entire adhesive layer.

[13] The adhesive composition as described in [11] or [12] above, wherein the modified polymer concentration of the surface layer portion of the adhesive layer, as determined through X-ray photoelectron spectrometry, is 1.5 times or more the modified polymer concentration of the entire adhesive layer.

[14] The adhesive composition as described in any of [11] to [13] above, wherein the adhesive layer has a haze of 3.0% or higher when the thickness of the adhesive layer is 50 $\mu$m.

[15] The adhesive composition as described in any of [11] to [14] above, wherein the acrylic adhesive polymer has a glass transition temperature of -40°C or higher.

[16] The adhesive composition as described in any of [11] to [15] above, wherein the acrylic adhesive polymer has a weight average molecular weight of 450,000 or higher.

[17] The adhesive composition as described in any of [11] to [16] above, wherein the acrylic adhesive polymer includes a structural unit derived from at least one species selected from the group consisting of an alkyl (meth)acrylate ester having a C1 to C3 alkyl group and an alkoxyalkyl (meth)acrylate ester having a C3 or C4 alkoxyalkyl group in a relative amount of 30 mass% or more, with respect to all the structural units included in the acrylic adhesive polymer.

[18] The adhesive composition as described in any of [11] to [17] above, wherein the acrylic adhesive polymer includes a structural unit derived from an amino group-containing unsaturated compound in a relative amount of 0.2 mass% or less, with respect to all the structural units included in the acrylic adhesive polymer.

[19] The adhesive composition as described in any of [11] to [18] above, wherein the modified polymer is at least one species selected from the group consisting of an acid-modified polyolefin, a chlorinated polyolefin, an acid-modified chlorinated polyolefin, an acryl-modified polyolefin, and an acryl-modified chlorinated polyolefin.

[20] The adhesive composition as described in any of [11] to [19] above, which further contains a cross-linking agent.

[21] A solvent-type adhesive composition which contains an acrylic adhesive polymer, a modified polymer which is at least one species selected from the group consisting of a modified polyolefin and a modified polydiene, and a solvent, wherein the adhesive layer having a thickness of 50 $\mu$m exhibits a haze of 3.0% or higher, the adhesive layer being formed on a substrate by applying the adhesive composition onto the substrate and removing the solvent.

[22] A decorative molded body including the adhesive layer of the adhesive sheet as described in any of [1] to [10] above which adhesive layer is stuck to a mold body.

Advantageous Effects of the Invention

The adhesive sheet of the present disclosure can provide high adhesion performance in a wide temperature range from room temperature to high temperature. Also, according to the adhesive composition of the present disclosure, there can be provided an adhesive layer which exhibits excellent adhesion performance at room temperature and high temperature.

Brief Description of the Drawings

[Fig. 1] Fig. 1 is an image of a surface layer portion of the adhesive layer of Example 13 observed under a scanning probe microscope.
[Fig. 2] Fig. 2 is an image of a surface layer portion of the adhesive layer of Comparative Example 4 observed under a scanning probe microscope.

Modes for Carrying Out the Invention

The present disclosure will next be described in detail. As used herein, the term "(meth)acryl" refers to acryl or methacryl or both. The term "(meth)acrylo" refers to acrylo or methacrylo or both. The term "(meth)acrylate" refers to acrylate or methacrylate or both.

<Adhesive composition and adhesive layer>

The adhesive composition of the present disclosure (hereinafter may also be referred to simply as "the present composition") is used for forming an adhesive layer, and contains an acrylic adhesive polymer, a modified polymer which is at least one species selected from the group consisting of a modified polyolefin and a modified polydiene, and a solvent. Since the acrylic adhesive polymer and the modified polymer are dissolved in a solvent, the present composition is a liquid composition in which the acrylic adhesive polymer and the modified polymer form a single phase.

In a first embodiment of the present composition, phase separation into the acrylic adhesive polymer and the modified polymer, both polymers present in the present composition, is evoked during formation of the adhesive layer by removing the solvent from the present composition which has been applied to the substrate. In a second embodiment of the present composition, when an adhesive layer having a thickness 50 $\mu$m is formed by removing the solvent from the present composition which has been applied to the substrate, the haze of the adhesive layer is 3.0% or higher. The adhesive layer obtained from the aforementioned present composition exhibits adhesion performance of the acrylic adhesive polymer and adhesion performance of the modified polymer in a well-balanced manner, whereby high adhesion performance can be attained at both room temperature and high temperature. Hereinafter, firstly, the adhesive layer formed from the present composition will be described.

(Adhesive layer)

The adhesive layer of the present disclosure may be formed by applying the present composition onto a substrate, and removing the solvent from the present composition which has been applied onto the substrate. As the substrate onto which the present composition is applied, a resin film made of any of various resin materials may be used. Example of such resin materials include polyester-based resin such as polyethylene terephthalate, polyether sulfone-based resin, acetate-based resin, polycarbonate-based resin, and polyolefin-based resin. The coating surface of the substrate to which the present composition is applied preferably has such a release property that the adhesive layer can be released. Such a substrate is called a separator or a release film. The release property of the coating surface may be provided through a known release treatment or a property intrinsic to the material of the substrate.

The present composition may be applied through a known coating method. Specific examples include application by means of a coater (e.g., a bar coater, an applicator, a gravure coater, a knife coater, a slot die coater, a doctor blade, or a dip coater), and techniques by means of a printing machine (e.g., gravure printing, offset printing, screen printing, or ink-jet printing).

Preferably, the present composition which has been applied to the substrate is subjected to a heating treatment, from the viewpoint of evoking phase separation into the acrylic adhesive polymer and the modified polymer. The time and temperature of the heating treatment may be appropriately set in accordance with the solvent contained in the present composition, the solid concentration of the present composition, and the like. Heating of the present composition may be conducted under normal pressure or a reduced pressure. By removing the solvent from the present composition which has been applied to the substrate preferably through the heating treatment, to thereby form the adhesive layer, phase separation into the acrylic adhesive polymer and the modified polymer is evoked during formation of the adhesive layer. The thus-formed adhesive layer has a thickness, for example, 2 to 200 $\mu$m.

The thus-formed adhesive layer has a surface layer portion in which the phase of the acrylic adhesive polymer and that of the modified polymer are separated from each other. In other words, in the adhesive layer formed from the present composition, phase separation into the acrylic polymer and the modified polymer is evoked during formation of the adhesive layer, whereby a first phase mainly formed of the acrylic adhesive polymer and a second phase mainly formed of the modified polymer are provided. As used herein, the term "phase separation" refers to the acrylic adhesive polymer, the modified polymer, and the solvent each in a state of single phase being transformed and separated to a phase mainly formed of the acrylic adhesive polymer, a phase mainly formed of the modified polymer, and the solvent (gas phase) in a step of removing the solvent according to the thermodynamic equilibrium conditions. In the phase separation state of the acrylic adhesive polymer and the modified polymer in the surface layer portion of the adhesive layer, an island-in-sea structure is typically formed. However, the phase separation state is not limited thereto. The concept "phase separation" differs from that of "segregation (more specifically, surface segregation)". The segregation refers to, in the adhesive layer containing polymers of hetero-species (i.e., a first polymer and a second polymer), the second polymer being localized in the uppermost (in a thickness direction) layer in the adhesive layer, with respect to the first polymer.

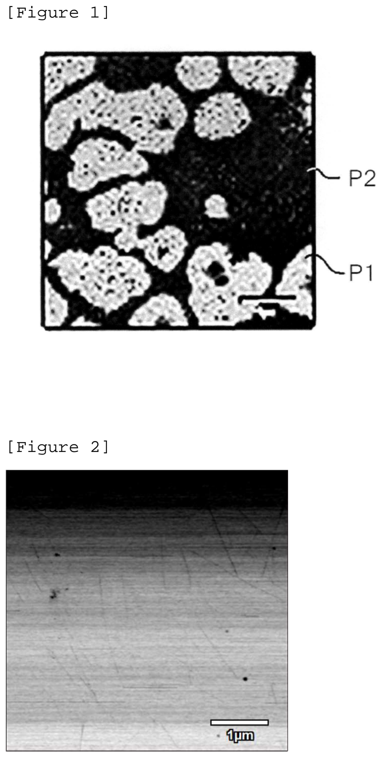

Fig. 1 is an image of a surface layer portion of the adhesive layer which has been formed by applying the present composition onto a substrate and heating the composition, the image being observed under a scanning probe microscope. Notably, in an actual procedure of formation of the adhesive layer shown in Fig. 1, the present composition (acrylic polymer : modified polyolefin = 100:7 (by mass), solvent: toluene/cyclohexane = 75/25 (by mass), and solid concentration: 20 mass%, corresponding to the adhesive composition of the below-mentioned Example 13) is applied onto a polyethylene terephthalate (PET) substrate and heated at 80°C to thereby remove the solvent, whereby an adhesive layer having a film thickness of 50 $\mu$m is formed. In Fig. 1, a pale color part represents a phase mainly formed of the acrylic adhesive polymer, which is a relatively soft polymer (i.e., a first phase P1), and a thick color part represents a phase mainly formed of the modified polyolefin, which is a relatively hard polymer (i.e., a second phase P2). As shown in Fig. 1, in the surface layer belonging to the adhesive layer, the first phase P1 mainly formed of the acrylic adhesive polymer and the second phase P2 mainly formed of the modified polyolefin are co-present, indicating phase separation into the acrylic adhesive polymer and the modified polyolefin.

Notably, the adhesive layer in which the acrylic adhesive polymer and the modified polymer are in a phase separation state may be formed through, for example, tuning the modification degree of the modified polymer to be incorporated into the adhesive composition, tuning the molecular weight of the modified polymer, incorporating a cross-linking agent, or a combination thereof. Generally, the lower the modification degree of the modified polymer, the easier the phase separation into the modified polymer and the acrylic adhesive polymer. Also generally, as the molecular weight of the modified polymer polyolefin increases to a value equivalent to that of the acrylic adhesive polymer, the phase separation into the modified polymer and the acrylic adhesive polymer more easily evoked.

Alternatively, by adjusting the difference in SP value between the acrylic adhesive polymer and the modified polymer incorporated into the adhesive composition to be a specific value or greater, an adhesive layer in which phase separation into the acrylic adhesive polymer and the modified polymer is present in the surface layer portion may be yielded. The SP value is a parameter for dissolution and can be calculated through a calculation method disclosed in, for example, "Polymer Engineering and Science", 14(2),147 (1974) by R. F. Fedors (i.e., the Fedors method). From the viewpoint of evoking phase separation into the acrylic adhesive polymer and the modified polymer, the difference in SP value (absolute value) between the acrylic adhesive polymer and the modified polymer is, for example, 1.0 or greater, preferably 1.5 or greater, more preferably 1.8 or greater.

Further, by observing the structure of the adhesive layer formed from the adhesive composition containing an intended blend of the acrylic adhesive polymer and the modified polymer dissolved in a solvent under an electron microscope or a scanning probe microscope (e.g., an atomic force microscope) or through small angle X-ray scattering or the like, phase separation feature of the acrylic adhesive polymer and the modified polymer can be easily detected.

Preferably, in the adhesive layer formed from the present composition, phase separation into the acrylic adhesive polymer and the modified polymer is evoked, and the modified polymer concentration of the surface layer portion of the adhesive layer higher than that of the entire adhesive layer. Thus, the adhesive layer in which phase separation into the acrylic adhesive polymer and the modified polymer is evoked and which has a relatively higher modified polymer concentration in the surface layer portion is preferred, from the viewpoint of achieving high adhesion performance at both room temperature and high temperature. Notably, the relatively higher modified polymer concentration in the surface layer portion is conceivably provided mainly by the difference in polarity and molecular weight between the modified polymer and the acrylic adhesive polymer. More specifically, the relatively higher modified polymer concentration in the surface layer portion is conceivably provided by the fact that the modified polymer, having a lower polarity or a smaller molecular weight, is easily localized on the low surface-layer energy interface side in the thickness direction of the adhesive layer.

Specifically, the modified polymer concentration of the surface layer portion of the adhesive layer determined through X-ray photoelectron spectrometry is preferably 1.5 times or more the modified polymer concentration of the entire adhesive layer. From the viewpoint of forming an adhesive layer exhibiting further higher adhesion performance at both room temperature and high temperature, the modified polymer concentration of the surface layer portion of the adhesive layer is more preferably 1.8 times or more, still more preferably 2.0 times or more, yet more preferably 2.2 times or more, further more preferably 2.5 times or more the modified polymer concentration of the entire adhesive layer. In the adhesive layer, no particular limitation is imposed on the upper limit of the modified polymer concentration of the surface layer portion with respect to the modified polymer concentration of the entire adhesive layer.

As used herein, the "the modified polymer concentration of the entire adhesive layer" is calculated as a ratio of the mass of the modified polymer with respect to the total mass of the acrylic adhesive polymer and the modified polymer contained in the adhesive composition for forming the adhesive layer. The "modified polymer concentration of the surface layer portion of the adhesive layer" is a compositional fraction of the modified polymer contained in the surface layer portion of the adhesive layer, as determined through X-ray photoelectron spectrometry. Details of the calculation procedure are in accordance with the methods described in the below-mentioned Examples.

Notably, when only one of the uppermost surfaces of the adhesive layer in the thickness direction is a surface on the low surface layer energy interface side, there can be yielded an adhesive layer having a higher modified polymer concentration at a surface on the interface side. When two of the uppermost surfaces of the adhesive layer in the thickness direction are surfaces on the low surface layer energy interface side, there can be yielded adhesive layers each having a higher modified polymer concentration at the uppermost surfaces. In the latter case, the expression "the modified polymer concentration of the surface layer portion of the adhesive layer as determined through X-ray photoelectron spectrometry" is X times or more the "modified polymer concentration of the entire adhesive layer" refers to the modified polymer concentration of each of the uppermost surfaces in the thickness direction being X times or more the modified polymer concentration of the entire adhesive layer.

When the amount of the modified polymer in the surface layer portion of the adhesive layer is represented by the ratio by mass with respect to the amount of the modified polymer in the entire adhesive layer, the amount of the modified polymer in the surface layer portion of the adhesive layer, as determined through X-ray photoelectron spectrometry, is preferably 15 mass% or more with respect to the amount of the modified polymer in the entire adhesive layer. From the viewpoint of forming an adhesive layer exhibiting further higher adhesion performance at both room temperature and high temperature, the amount of the modified polymer in the surface layer portion of the adhesive layer is more preferably 20 mass% or more, still more preferably 25 mass% or more, yet more preferably 30 mass% or more, with respect to the amount of the modified polymer in the entire adhesive layer. No particular limitation is imposed on the upper limit of the amount of the modified polymer in the surface layer portion of the adhesive layer with respect to the amount of the modified polymer in the entire adhesive layer. From the viewpoint of ensuring adhesion performance, the amount of the modified polymer in the surface layer portion of the adhesive layer is, for example, 95 mass% or less, preferably 90 mass% or less, more preferably 85 mass% or less, with respect to the amount of the modified polymer in the entire adhesive layer.

In the case where the adhesive layer is formed from an adhesive composition containing the acrylic adhesive polymer and the modified polymer, the compositional fraction (mass fraction $W_B$) of the modified polymer in the surface layer portion of the adhesive layer may be determined by compositional analysis of the adhesive layer through X-ray photoelectron spectrometry. Notably, the compositional fraction (mass fraction $W_B$) of the modified polymer in the surface layer portion of the adhesive layer is specifically represented by the following numerical expressions (1) and (2):

$$W_B = \text{(mass of modified polymer)} / \text{(total mass of modified polymer and acrylic adhesive polymer)} \tag{1}$$

$$W_B = 1 - W_A \quad \cdots \quad (2)$$

(in numerical expressions (1) and (2), $W_A$ represents the mass fraction of the acrylic adhesive polymer with respect to the total mass of the modified polymer and the acrylic adhesive polymer in the surface layer portion of the adhesive layer; and $W_B$ represents the mass fraction of the modified polymer with respect to the total mass of the modified polymer and the acrylic adhesive polymer in the surface layer portion of the adhesive layer).

The mass fraction $W_B$ (represented by percentage) of the modified polymer in the surface layer portion of the adhesive layer is preferably 10% or more. When the mass fraction $W_B$ falls within the range, the modified polymer concentration of the surface layer portion increases, while phase separation into the acrylic adhesive polymer and the modified polymer is evoked in the adhesive layer. As a result, an adhesive layer exhibiting high adhesion performance at both room temperature and high temperature can be yielded. The mass fraction $W_B$ (represented by percentage) is more preferably 15% or higher, still more preferably 20% or higher.

·Peel strength

From the viewpoint of suppressing delaminating or peeling of the adhesive layer from the substrate at room temperature, the adhesive layer which is formed of the present composition and which has a thickness of 50 $\mu$m preferably has a peel strength with respect to a polypropylene (PP) plate of 5 N/25 mm or higher at 23°C and a peeling rate of 300 mm/minute. From the viewpoint of yielding an adhesive layer having excellent adhesion performance, the peel strength of the adhesive layer which is formed of the present composition and which has a film thickness of 50 $\mu$m at 23°C is more preferably 10 N/25 mm or higher, still more preferably 15 N/25 mm or higher, yet more preferably 20 N/25 mm or higher.

Also, the peel strength of the adhesive layer which is formed of the present composition and which has a film thickness of 50 $\mu$m at 85°C, with respect to a PP plate at a peeling rate of 300 mm/minute, is preferably 5 N/25mm or higher, from the viewpoints of suppressing delaminating or peeling of the adhesive layer from the substrate at high temperature and enhancing the heat resistance of the formed adhesive layer. The peel strength of the adhesive layer which is formed of the present composition and which has a film thickness of 50 $\mu$m at 85°C is more preferably 7 N/25 mm or higher, still more preferably 10 N/25 mm or higher. Notably, in the present specification, the peel strength of the adhesive layer is a value determined in accordance with JIS Z-0237. Details of the measurement procedure are in accordance with the measurement methods described in the below-mentioned Examples.

·Haze (value)

Since the adhesive layer has a structure in which the acrylic adhesive polymer and the modified polymer are in a phase separation state, the haze serving as an index for unclearness is comparatively higher. More specifically, the haze of the adhesive layer is preferably 3.0% or higher, the measurement measured by means of a haze meter after the adhesive layer having a thickness of 50 $\mu$m has been attached to a glass substrate and allowed to stand for one day at 23°C and 50% RH. From the viewpoint of achieving high adhesion strength at both room temperature and high temperature by virtue of formation of a phase separation state into the acrylic adhesive polymer and the modified polymer, the haze of the adhesive layer under the above conditions is more preferably 3.5% or higher, still more preferably 4.0% or higher. Also, when the adhesive layer is applied to a use to which transparency is not required, the haze of the adhesive layer measured under the above conditions is preferably 15% or higher, more preferably 20% or higher, from the viewpoint of yielding an adhesive layer exhibiting higher adhesion performance. No particular limitation is imposed on the upper limit of the haze of the adhesive layer determined under the aforementioned conditions. When the adhesive layer is applied to a use to which transparency is required, the haze of the adhesive layer measured under the above conditions is preferably 30% or less, more preferably 25% or less. Details of the haze measurement procedure are in accordance with the method described in the below-mentioned Examples.

Notably, the adhesive composition for use in formation of the adhesive layer of the present disclosure has a single phase of the acrylic adhesive polymer and the modified polymer in a homogeneous state. In the course of forming the adhesive layer from such a uniform adhesive composition, phase separation into the acrylic adhesive polymer and the modified polymer is evoked. As a result, the adhesive composition formed from the present composition successfully exhibits a relatively high haze value. Thus, although the composition contains the acrylic adhesive polymer and the modified polymer, the acrylic adhesive polymer and the modified polymer is regarded to not in a phase separation state in the adhesive layer having a sufficiently low haze value (e.g., 1.5% or lower, or lower than 1.0%).

·Gel fraction

When the present composition contains a cross-linking agent, the gel fraction of the adhesive layer formed of the present composition is preferably 50% or higher. By tuning the gel fraction to 50% or higher, heat resistance of the adhesive layer and durability of the adhesive layer with respect to variation in temperature can be fully enhanced, and the provided adhesive layer successfully exhibits high adhesion performance at high temperature. The gel fraction of the adhesive layer is more preferably 55% or higher, still more preferably 60% or higher, yet more preferably 65% or higher. The upper limit of the gel fraction is preferably 95% or lower, more preferably 90% or lower, still more preferably 85% or lower. Notably, as used herein, the gel fraction of the adhesive layer is defined as a ratio of the mass of the remaining adhesive layer after immersion in a solvent (W2) with respect to the initial mass of the adhesive layer (W1). Details of the gel fraction are in accordance with the measurement methods described in the below-mentioned Examples.

·Glass transition temperature

The adhesive layer preferably has a glass transition temperature (Tg). Specifically, the Tg of the entire adhesive layer is preferably 20°C or lower. When the Tg of the entire adhesion layer is 20°C or lower, the provided adhesive layer successfully exhibits more suitable adhesion performance at room temperature. From the viewpoint of yielding an adhesive layer exhibiting more suitable adhesion performance at room temperature, the Tg of the entire adhesive layer is more preferably 10°C or lower, still more preferably 0°C or lower, yet more preferably -5°C or lower. Also, the Tg of the entire adhesive layer is preferably -80°C or higher, more preferably -70°C or higher, still more preferably -60°C or higher. Notably, the Tg of the entire adhesion layer is defined as a value obtained by means of a differential scanning calorimeter (DSC) at a temperature elevation rate of 10°C/min in a measurement atmosphere of nitrogen. Details of measurement conditions are in accordance with the description of the below-mentioned Examples.

(Adhesive composition)

Next, the adhesive composition for providing the aforementioned adhesive layer will be described. The present composition contains an acrylic adhesive polymer, a modified polymer, and a solvent.

·Acrylic adhesive polymer

The acrylic adhesive polymer is a polymer including a (meth)acrylic compound as a main structural unit. From the viewpoint of yielding a polymer having a relatively low Tg and a sufficient adhesion property, the acrylic adhesive polymer preferably employs a structural unit derived from at least one species selected from the group consisting of an alkyl (meth) acrylate ester having a C1 to C8 alkyl group and an alkoxyalkyl (meth)acrylate ester having a C1 to C4 alkoxy group (hereinafter may also be referred to as a "structural unit UA"). Notably, the monomers forming the acrylic adhesive polymer may be used singly or in combination of two or more species.

Specific examples of the alkyl (meth)acrylate ester having a C1 to C8 alkyl group for use in production of the acrylic adhesive polymer include methyl (meth)acrylate, ethyl (meth)acrylate, n-propyl (meth)acrylate, isopropyl (meth) acrylate, n-butyl (meth)acrylate, isobutyl (meth)acrylate, n-hexyl (meth)acrylate, n-octyl (meth)acrylate, isooctyl (meth) acrylate, and 2-ethylhexyl (meth)acrylate. Examples of preferred monomers include methyl (meth)acrylate, ethyl (meth) acrylate, n-butyl (meth)acrylate, and 2-ethylhexyl (meth)acrylate.

Specific examples of alkoxyalkyl (meth)acrylate ester having a C1 to C4 alkoxy group for use in production of the acrylic adhesive polymer include methoxyethyl (meth)acrylate, ethoxymethyl (meth)acrylate, ethoxyethyl (meth)acrylate, butoxyethyl (meth)acrylate, methoxybutyl (meth)acrylate, and ethoxybutyl (meth)acrylate, and butoxybutyl (meth)acrylate.

In the acrylic adhesive polymer, the structural unit UA content of the acrylic adhesive polymer with respect to all the structural units included in the acrylic adhesive polymer (i.e., the total amount of the monomer units forming the acrylic adhesive polymer) is preferably 50 mass% or more, more preferably 70 mass% or more, still more preferably 80 mass% or more, yet more preferably 90 mass% or more. By adjusting the structural unit UA content to be 50 mass% or more, adhesion force, initial adhesion force (tack), and low-temperature adhesion performance can be sufficiently enhanced.

From the viewpoints of easily evoking phase separation into the acrylic adhesive polymer and the modified polymer in the adhesive layer, achieving a relatively high modified polymer concentration of the surface layer portion, and enhancing adhesion performance at high temperature, the acrylic adhesive polymer preferably includes a structural unit derived from at least one species selected from the group consisting of an alkyl (meth)acrylate ester having a C1 to C4 alkyl group and an alkoxy (meth)acrylate ester having a C3 or C4 alkoxyalkyl group (hereinafter may also be referred to as a "structural unit UA-1"). In the production of the acrylic adhesive polymer, when one or both of such an alkyl (meth)acrylate ester and an alkoxy acrylate ester, elastic modulus of the acrylic adhesive polymer can be enhanced, which is effective from the viewpoint of enhancement in heat resistance. Among these structural units, the structural unit UA-1 is preferably a structural unit derived from one species selected from the group consisting of methyl (meth)acrylate, ethyl (meth)acrylate, butyl (meth)acrylate, and methoxyethyl (meth)acrylate. The structural unit UA-1 content of the acrylic adhesive polymer is preferably 50 mass% or higher, more preferably 70 mass% or higher, with respect to all the structural units present in the acrylic adhesive polymer.

From the viewpoint of yielding an adhesive layer having higher adhesion performance at high temperature, the acrylic adhesive polymer preferably includes, among others, a structural unit derived from at least one species selected from the group consisting of an alkyl (meth)acrylate ester having a C1 to C3 alkyl group and an alkoxy (meth)acrylate ester having a C3 or C4 alkoxyalkyl group in an amount of 30 mass% or more, more preferably 35 mass% or more, still more preferably 40 mass% or more, with respect to all the structural units included in the acrylic adhesive polymer.

In the production of the acrylic adhesive polymer, when a monomer having a cross-linkable functional group (hereinafter may also be referred to as a "cross-linkable group-containing monomer") is used, the acrylic adhesive polymer can be provided with a cross-linkable structural unit. Through incorporation of a cross-linkable structural unit into the acrylic adhesive polymer, adhesion performance of the adhesive layer at high temperature can be further enhanced.

No particular limitation is imposed on the cross-linkable group-containing monomer. The cross-linkable group-containing monomer used in the production of the acrylic adhesive polymer is preferably at least one species selected from the group consisting of (meth)acrylic acid, a hydroxyalkyl (meth)acrylate compound, an epoxy group-containing (meth)acrylate ester compound, or a reactive silyl group-containing (meth)acrylate ester compound. Among them, from the viewpoint of the tendency of enhancing adhesion performance of the acrylic adhesive polymer, at least one species selected from the group consisting of (meth)acrylic acid and a hydroxyalkyl (meth)acrylate compound is preferred; at least one species selected from the group consisting of (meth)acrylic acid and a hydroxyalkyl (meth)acrylate compound having a C2 to C8 hydroxy alkyl group is more preferred; and at least one species selected from the group consisting of (meth) acrylic acid and a hydroxyalkyl (meth)acrylate compound having a C2 to C4 hydroxy alkyl group is particularly preferred.

In the case where the acrylic adhesive polymer includes a cross-linkable structural unit, the cross-linkable structural unit content is preferably 0.1 mass% or higher, more preferably 0.5 mass% or higher, still more preferably 1 mass% or higher, with respect to all the structural units present in the acrylic adhesive polymer. By adjusting the cross-linkable structural unit content of the acrylic adhesive polymer to 0.1 mass% or higher, a suitable cross-linking structure can be formed, to thereby yield an adhesive polymer having higher heat resistance and durability. Although no particular limitation is imposed on the upper limit of the cross-linkable structural unit content, the upper limit is preferably 30 mass% or lower, more preferably 20 mass% or lower, still more preferably 15 mass% or lower, particularly preferably 10 mass% or lower, with respect to all the structural units present in the acrylic adhesive polymer, from the viewpoint of securing flexibility of the formed adhesive layer. Notably, in the production of the acrylic adhesive polymer, the cross-linkable group-containing monomer may be used singly or in combination of two or more species.

So long as the adhesion performance is no impaired, the acrylic adhesive polymer may further include structural unit derived from a monomer other than the aforementioned monomers, the additional monomer being co-polymerizable with any of the aforementioned monomers (hereinafter may also be referred to as an "additional monomer"). Examples of the additional monomer include an alicyclic (meth)acrylate ester compound, an aromatic (meth)acrylate ester compound, a polyalkylene glycol mono(meth)acrylate compound, an aromatic vinyl compound, an imide group-containing vinyl compound, an amino group-containing unsaturated compound, an amide group-containing unsaturated compound, and a nitrile group-containing unsaturated compound.

Specific examples of the alicyclic (meth)acrylate ester compound include cyclohexyl (meth)acrylate, methylcyclohexyl (meth)acrylate, tert-butylcyclohexyl (meth)acrylate, cyclododecyl (meth)acrylate, isobornyl (meth)acrylate, 1-adamantyl (meth)acrylate, dicyclopentenyl (meth)acrylate, and dicyclopentanyl (meth)acrylate.

Examples of the aromatic (meth)acrylate ester compound include phenyl (meth)acrylate, benzyl (meth)acrylate, phenoxymethyl (meth)acrylate, 2-phenoxyethyl (meth)acrylate, and 3-phenoxypropyl (meth)acrylate.

Examples of the polyalkylene glycol mono(meth)acrylate compound include polyethylene glycol mono(meth) acrylate, polypropylene glycol mono(meth)acrylate, polyethylene glycol-polypropylene glycol mono(meth)acrylate, polyethylene glycol-polybutylene glycol mono(meth)acrylate, methoxypolyethylene glycol mono(meth)acrylate, lauroxypolyethylene glycol mono(meth)acrylate, stearoxypolyethylene glycol mono(meth)acrylate, octoxypolyethylene glycol-polypropylene glycol mono(meth)acrylate, phenoxypolyethylene glycol mono(meth)acrylate, phenoxypolyethylene glycol-polypropylene glycol mono(meth)acrylate, nonylphenoxypolyethylene glycol mono(meth)acrylate, nonylphenoxypolypropylene glycol mono(meth)acrylate, and nonyl phenoxypolyethylene glycol-polypropylene glycol mono(meth)acrylate.

Examples of the aromatic vinyl compound include styrene compounds such as styrene, $\alpha$-methylstyrene, $\beta$-methylstyrene, vinylxylene, o-methylstyrene, m-methylstyrene, p-methylstyrene, o-ethylstyrene, m-ethylstyrene, p-ethylstyrene, p-n-butylstyrene, p-isobutylstyrene, p-t-butylstyrene, o-methoxystyrene, m-methoxystyrene, p-methoxystyrene, o-chlorostyrene, m-chlorostyrene, p-chlorostyrene, p-hydroxystyrene, m-hydroxystyrene, o-hydroxystyrene, p-isopropenylphenol, m-isopropenylphenol, o-isopropenylphenol, o-vinylbenzoic acid, m-vinylbenzoic acid, p-vinylbenzoic acid, and divinylbenzene; and vinylnaphthalene.

Examples of the imide group-containing vinyl compound include maleimide compounds such as maleimide and an N-substituted maleimide compound; itaconimide compounds such as N-methylitaconimide, N-ethylitaconimide, N-butylitaconimide, N-octylitaconimide, N-2-ethylhexylitaconimide, N-cyclohexylitaconimide, and N-laurylitaconimide; citraconimide compounds such as N-methylcitraconimide, N-ethylcitraconimide, N-butylcitraconimide, N-octylcitraconimide, N-2-ethylhexylcitraconimide, N-cyclohexylcitraconimide, and N-laurylcitraconimide; and (meth)acrylimide compounds such as N-(2-(meth)acryloyloxyethyl)succinimide, N-(2-(meth)acryloyloxyethyl)maleimide, N-(2-(meth)acryloyloxyethyl)phthalimide, N-(4-(meth)acryloyloxybutyl)succinimide, N-(4-(meth)acryloyloxybutyl)maleimide, and N-(4-(meth)acryloyloxybutyl)phthalimide. Among them, a maleimide compound is preferably used as the imide group-containing vinyl compound.

Examples of the amino group-containing unsaturated compound include dimethylaminomethyl (meth)acrylate, diethylaminomethyl (meth)acrylate, 2-dimethylamminoethyl (meth)acrylate, 2-diethylaminoethyl (meth)acrylate, 2-(di-n-propylamino)ethyl (meth)acrylate, 2-dimethylaminopropyl (meth)acrylate, 2-diethylaminopropyl (meth)acrylate, 2-(di-n-propylamino)propyl (meth)acrylate, 3-dimethylaminopropyl (meth)acrylate, 3-diethylaminopropyl (meth)acrylate, and 3-(di-n-propylamino)propyl (meth)acrylate.

Examples of the amide group-containing unsaturated compound include (meth)acrylamide, a (meth)acrylamide derivative, and an N-vinylamide-type monomer. Among them, specific examples of the (meth)acrylamide derivative include tert-butyl(meth)acrylamide, N,N-dimethyl(meth)acrylamide, N,N-diethyl(meth)acrylamide, N-isopropyl(meth)acrylamide, N,N-dimethylaminopropyl(meth)acrylamide, and (meth)acryloylmorpholine. Specific examples of the N-vinyl-lamide-type monomer include N-vinylacetamide, N-vinylformamide, and N-vinylisobutylamide.

Examples of the nitrile group-containing unsaturated compound include cyanomethyl (meth)acrylate, 1-cyanoethyl (meth)acrylate, 2-cyanoethyl (meth)acrylate, 1-cyanopropyl (meth)acrylate, 2-cyanopropyl (meth)acrylate, 3-cyanopropyl (meth)acrylate, 4-cyanobutyl (meth)acrylate, 6-cyanohexyl (meth)acrylate, 2-ethyl-6-cyanohexyl (meth)acrylate, 8-cyanooctyl (meth)acrylate, (meth)acrylonitrile, $\alpha$-ethylacrylonitrile, $\alpha$-isopropylacrylonitrile, $\alpha$-chloroacrylonitrile, and $\alpha$-fluoroacrylonitrile.

Notably, the relative amount of the additional monomer forming the acrylic adhesive polymer may be appropriately modulated, so long as the effects of the present disclosure are not impaired. The additional monomer may be used singly or in combination of two or more species.

From the viewpoint of enhancing adhesion performance of the adhesive layer at high temperature, the relative amount of the structural unit derived from the amino group-containing unsaturated compound in the acrylic adhesive polymer is preferably 0.2 mass% or less, with respect to all the structural units present in the acrylic adhesive polymer. When the relative amount of the structural unit derived from the amino group-containing unsaturated compound in the acrylic adhesive polymer is relatively large, phase separation into the acrylic adhesive polymer and the modified polymer is suppressed by reinforced interaction between the acrylic adhesive polymer and the modified polymer, thereby possibly resulting in a drop in adhesion performance of the adhesive layer. From such a viewpoint, the relative amount of the structural unit derived from the amino group-containing unsaturated compound is more preferably 0.1 mass% or less, still more preferably 0.05 mass% or less, with respect to all the structural units present in the acrylic adhesive polymer. Particularly preferably, the acrylic adhesive polymer substantially includes no structural unit derived from the amino group-containing unsaturated compound.

·Production of acrylic adhesive polymer

No particular limitation is imposed on the method of producing the acrylic adhesive polymer, and the polymer may be produced through a known production method. The acrylic adhesive polymer can be produced by polymerizing the aforementioned monomers through a known radical polymerization technique such as solution polymerization, suspension polymerization, emulsion polymerization, or bulk polymerization.

In one exemplary procedure of the production method based on solution polymerization, an organic solvent and monomers are fed to a reactor, and a polymerization initiator is added to the reactor. The monomers are heated at 50 to 300°C, to thereby polymerize the monomers. In this case, the method of feeding the raw material including monomers may be a batch-manner initial collective feeding of all the raw materials; a semi-continuous feeding in which at least a part of raw materials is continuously fed to a reactor; or a continuous polymerization format in which all the raw materials are continuously fed to a reactor and the formed resin is simultaneously exhausted from the reactor.

Examples of the organic solvent employed in solution polymerization include cyclic ethers such as tetrahydrofuran, tetrahydropyran, 4-methyltetrahydropyran, and dioxane; an aromatic hydrocarbon compound such as benzene, toluene, and xylene; hydrocarbon compounds such as cyclohexane, methylcyclohexane, and isooctane; esters such as ethyl acetate and butyl acetate; ketones such as acetone, methyl ethyl ketone, and cyclohexanone; and alcohols such as methyl orthoformate, methyl orthoacetate, methanol, ethanol, and isopropanol. These organic solvents may be used singly or in combination of two or more species. The amount of the organic solvent used is such an amount that the relative total amount of the monomers involved in polymerization with respect to the sum of the amounts of organic solvents and monomers is adjusted to, for example, 1 to 50 mass%. From the viewpoints of monomer polymerizability and solubility of the acrylic adhesive polymer, and blend easiness of the produced modified polymer, cyclic ethers, aromatic hydrocarbon compounds, and ketones are preferred, with toluene, xylene, ethyl acetate, and butyl acetate being more preferred.

No particular limitation is imposed on the polymerization initiator, and a known radical polymerization initiator such as an azo-type compound, an organic peroxide, or an inorganic peroxide may be used as the polymerization initiator. Among them, an azo-type compound is preferred, from the viewpoints of safe and easy handing and suppression of side reaction in radical polymerization. Alternatively, a redox-type polymerization initiator formed of a known oxidizing agent and reducing agent may also be used as the polymerization initiator. Yet alternatively, a known chain-transfer agent may be used in combination with the polymerization initiator.

Specific examples of the polymerization initiator of the azo-type compound include 2,2'-azobis(isobutyronitrile), 2,2'-azobis(2-methylbutyronitrile), 2,2'-azobis(2,4-dimethylvaleronitrile), 4,4'-azobis(4-cyanovaleric acid), 2-(tert-butylazo)-2-cyanopropane, 2,2'-azobis(2,4,4-trimethylpentane), 2,2'-azobis(2-methylpropane), and dimethyl-2,2'-azobis(2-methylpropionate).

Examples of the organic peroxide include cyclohexanone peroxide, 3,3,5-trimethylcyclohexanone peroxide, 1,1-bis(tert-butylperoxy)-3,3,5-trimethylcyclohexane, 2,5-dimethyl-2,5-di(tert-butylperoxy)hexane, diisopropylbenzene peroxide, and 2,5-dimethyl-2,5-di(benzoylperoxy)hexane.

Examples of the inorganic peroxide include potassium persulfate and sodium persulfate. Examples of the redox-type polymerization initiator include combinations of a reducing agent (e.g., sodium sulfite, sodium thiosulfate, sodium formaldehyde sulfoxylate, ascorbic acid, or ferrous sulfate) and an oxidizing agent (e.g., potassium peroxodisulfate, hydrogen peroxide, or tert-butyl hydro peroxide). In the production of the acrylic adhesive polymer, the amount of the polymerization initiator used is adjusted to, for example, 0.01 to 20 parts by mass, with respect to the total amount of the monomers employed in polymerization as 100 parts by mass.

The glass transition temperature (Tg) of the acrylic adhesive polymer preferably falls within a range of -70°C or higher and 10°C or lower. When the Tg of the acrylic adhesive polymer is -70°C or higher, cohesive force of the adhesive layer can be sufficiently enhanced, thereby securing sufficient adhesion performance, which is preferred. From the viewpoint of more enhancing adhesion performance at high temperature, the Tg of the acrylic adhesive polymer is more preferably -60°C or higher, still more preferably -50°C or higher, yet more preferably -40°C or higher.

When the Tg of the acrylic adhesive polymer is 10°C or lower, both adhesion performance at room temperature and followability of the adhesive layer to a bonding object are enhanced. As a result, an adhesive layer exhibiting high adhesion performance also at high temperature can be yielded. The upper limit of the Tg of the acrylic adhesive polymer is more preferably 5°C or lower, still more preferably 0°C or lower, yet more preferably -5°C or lower, further more preferably -10°C or lower.

Notably, in the present specification, the Tg of a polymer is a value as determined from the intersection point between the base line of a heat flux curve obtained through DSC and a tangent point at the inflection point. Details of measurement conditions are in accordance with the Examples below. The Tg of the polymer may be adjusted to a value of interest by modifying the type, composition, etc. of the monomers forming the polymer.

·Molecular weight characteristics of acrylic adhesive polymer

From the viewpoint of yielding a polymer exhibiting sufficient cohesive force and suitable adhesion performance, the Mw of the acrylic adhesive polymer is preferably 100,000 or higher. When the Mw of the acrylic adhesive polymer is 100,000 or higher, sufficient adhesion performance and solvent resistance can be secured. The Mw of the acrylic adhesive polymer is more preferably 200,000 or higher, still more preferably 300,000 or higher, yet more preferably 400,000 or higher, further more preferably 450,000 or higher.

No particular limitation is imposed on the upper limit of the Mw of the acrylic adhesive polymer. However, from the viewpoint of securing suitable coatability and handling performance during formation of the adhesive layer as well as ease of production, the Mw is preferably 3,000,000 or lower, more preferably 2,000,000 or lower, still more preferably 1,500,000 or lower. The Mw of the acrylic adhesive polymer preferably falls within a range of 100,000 or higher and 3,000,000 or lower, more preferably 200,000 or higher and 2,000,000 or lower, still more preferably 400,000 or higher and 1,500,000 or lower. Notably, in the present specification, the molecular weight of a polymer is a value which is determined through gel permeation chromatography (GPC) and reduced to polystyrene.

Regarding the acrylic adhesive polymer, the molecular weight distribution (Mw/Mn), which is a ratio of Mw to Mn, is preferably 10.0 or lower, more preferably 9.0 or lower, from the viewpoints of easily achieving suitable adhesion performance and suppression of an increase in viscosity of the adhesive composition. No particular limitation is imposed on the lower limit of the Mw/Mn of the acrylic adhesive polymer, and the Mw/Mn may be adjusted to 1.0 or higher.

The SP value of the acrylic adhesive polymer, which is calculated through the Fedors method, is preferably 9.95 or higher, more preferably 10.00 or higher, still more preferably 10.05 or higher, yet more preferably 10.10 or higher. When the SP value of the acrylic adhesive polymer satisfies the above conditions, there can be yielded an adhesive layer exhibiting higher adhesion performance at both room temperature and high temperature. Specifically, the SP value determined through the Fedors method is calculated by the following numerical formula (3).

[NF1]

$$\delta = \sqrt{\frac{\sum \Delta E_{vap}}{\sum V}} \quad \cdots \quad (3)$$

$\delta$: SP value $((cal/cm^3)^{1/2})$
$\Delta E_{vap}$: molar heat of vaporization of each moiety (cal/mol)
$V$: molar volume of each moiety $(cm^3/mol)$

From the viewpoint of fully securing adhesion performance of the adhesive layer at both room temperature and high temperature, the acrylic adhesive polymer content of the present adhesive composition is preferably 70 mass% or higher, with respect to the total solid content of the present composition (i.e., a ratio of the mass of the components other than the solvent to the entire mass of the adhesive composition). From the above viewpoint, the acrylic adhesive polymer content with respect to the total solid content of the present composition is more preferably 80 mass% or higher, still more preferably 85 mass% or higher.

·Modified polymer

The modified polymer refers to a chemically modified product of polyolefin or polydiene or both. The modified polymer has, in a single molecule, a structure or a functional group differing from an unsaturated hydrocarbon unit. Among the modified polymers, a modified polyolefin refers to a chemically modified polyolefin which has a structure or a functional group differing from an olefin unit in a single molecule. Examples of the polyolefin and polydiene include a C2 to C20 α-olefin and a polymer including a structural unit derived from at least one monomer selected from the group consisting of a C2 to C20 conjugated diene and a C2 to C20 non-conjugated diene. Specific examples include a C2 to C20 α-olefin, a conjugated diene homopolymer, a non-conjugated diene homopolymer, and two or more copolymers selected from the group consisting of a C2 to C20 α-olefin, a C2 to C20 conjugated diene, and a C2 to C20 non-conjugated diene.

Specific examples of the C2 to C20 α-olefin include ethylene, propylene, 1-butene, 1-pentene, 3-methyl-1-butene, 1-hexene, 3-methyl-1-pentene, 4-methyl-1-pentene, 1-heptene, 4-methyl-1-hexene, 1-octene, 4,4-dimethyl-1-hexene, 1-nonene, 1-decene, 1-undecene, and 1-dodecene. Specific examples of the C2 to C20 conjugated or non-conjugated diene include butadiene, 1,5-hexadiene, ethyldenenorbornene, and dicyclopentadiene.

The polyolefin forming the modified polyolefin may be a copolymer of an olefin with another unsaturated monomer. Examples of the unsaturated monomer include unsaturated monocarboxylic acids such as (meth)acrylic acid, crotonic acid, isocrotonic acid, and cinnamic acid; unsaturated dicarboxy acids such as fumaric acid, maleic acid, citraconic acid, chloromaleic acid, glutaconic acid, and itaconic acid; a half esters or half amides of an unsaturated dicarboxylic acid; unsaturated tricarboxylic acids such as trans-aconitic acid; carboxylic anhydrides such as maleic anhydride, citraconic anhydride, chloromaleic anhydride, itaconic anhydride, and 3,4,5,6-tetrahydrophtalic anhydride; (meth)acrylate esters such as methyl (meth)acrylate, ethyl (meth)acrylate, n-propyl (meth)acrylate, n-butyl (meth)acrylate, and tert-butyl (meth)acrylate; and oligomers of an unsaturated compound having an unsaturated bond at an end thereof; conjugated or non-conjugated dienes such as butadiene, 1,5-hexadiene, ethylidenenorbornene, and dicyclopentadiene. Similarly, the polydiene forming the modified polydiene may be a copolymer of a conjugated or non-conjugated diene with another unsaturated monomer. Examples of the polyolefin include ethylene-ethyl acrylate copolymer and ethylene-vinyl acetate copolymer. Examples of the polydiene include styrene-butadiene copolymer and styreneisoprene copolymer. When employed, the copolymer may be appropriately selected from random copolymer, block copolymer, or graft copolymer.

Examples of preferred polyolefins include polypropylene, propylene-ethylene copolymer, propylene-1-butene copolymer, propylene-ethylene-1-butene copolymer, and propylene-ethylene-1-octdene copolymer. Alternatively, the polyolefin may be a blend of these polymers. When a propylene copolymer is employed, the propylene content is preferably 50 mass% or higher, more preferably 60 mass% or higher, still more preferably 75 mass% or higher. Of these, the polyolefin is preferably polypropylene or a propylene copolymer.

Commercial products of polyolefin may also be used. Specific examples include "L-MODU" series (products of Idemitsu Kosan Co., Ltd), "REXtac" series (products of LLC), "Vestoplast" series (products of Evonik), "Eastoflex" series and "Aerafin" series (products of Eastman), "Tafmer" series (products of Mitsui Chemicals, Inc.), "Prime TPO" series (products of Prime Polymer Co., Ltd.), "Versify" series (products of Dow Chemical), "Vistamaxx" series and "Linxar" series (products of Exxon Mobile Corporation), "Licocene" series (products of Clariant), and "Adflex" series (products of Basell).

Examples of the type of modification include acid modification, chlorination, (meth)acrylate ester modification (hereinafter may also be referred to as "acryl modification"), carbodiimide modification, urea modification, and imine modification. The modified polyolefin may be formed by conducting two or more consecutive modification steps. Specific examples include acid-modified and chlorinated polyolefin, acryl-modified and chlorinated polyolefin, and urethane-modified and chlorinated polyolefin. From the viewpoints of excellent effect of improving adhesion performance at high temperature and availability, the modified polymer is preferably, among others, a modified polyolefin, more preferably at least one species selected from the group consisting of acid-modified polyolefin, chlorinated polyolefin, acid-modified and chlorinated polyolefin, acryl-modified polyolefin, and acryl-modified chlorinated polyolefin. In particular, from the viewpoints of easily evoking phase separation into acrylic adhesive polymer and the modified polymer by greater difference in SP value with the acrylic adhesive polymer, and thus yielding an adhesive layer exhibiting enhanced adhesion performance at high temperature, the modified polymer is still more preferably at least one species selected from the group consisting of acid-modified polyolefin, acid-modified chlorinated polyolefin, acryl-modified polyolefin, and acryl-modified chlorinated polyolefin, yet more preferably at least one species selected from the group consisting of acid-modified polyolefin and acryl-modified polyolefin.

Each of the acid-modified polyolefin and the acid-modified chlorinated polyolefin is preferably modified with at least one species selected from the group consisting of a carboxylic acid or a carboxylic anhydride (hereinafter may also be referred to as a "particular acid modification agent"). Such a modified polyolefin may be produced through, for example, graft copolymerization of a polyolefin with a particular acid modification agent. The modification reaction may be performed through a conventionally known method. Examples of the method include a copolymerization process in which a particular acid modification agent is added to a molten polyolefin formed by means of an extruder; a copolymerization process in which a particular acid modification agent is added to a polyolefin dissolved in a solvent; and a copolymerization process in which a particular acid modification agent is added to a polyolefin in a suspension state. Notably, the modification site of the polyolefin chain of the modified polyolefin may be one end of the molecular chain, both ends of the molecular chain, and a middle point of the molecular chain. Among them, a plurality of sites thereof may be modified.

Examples of the particular acid modification agent employed in the modification reaction include unsaturated monocarboxylic acids such as (meth)acrylic acid, crotonic acid, isocrotonic acid, and cinnamic acid; unsaturated dicarboxylic acids such as fumaric acid, maleic acid, citraconic acid, chloromaleic acid, glutaconic acid, and itaconic acid; a half esters or half amides of an unsaturated dicarboxylic acid; unsaturated tricarboxylic acids such as trans-aconitic acid; and carboxylic anhydrides such as maleic anhydride, citraconic anhydride, chloromaleic anhydride, itaconic anhydride, and 3,4,5,6-tetrahydrophtalic anhydride. Of these, at least one species selected from the group consisting of the unsaturated monocarboxylic acid and its carboxylic anhydride is preferred, with at least one species selected from the group consisting of (meth)acrylic acid, maleic acid, and maleic anhydride being more preferred, maleic acid being still more preferred.

Notably, the acid-modified polyolefin or the acid-modified chlorinated polyolefin incorporated into the present composition may be modified with, in addition to the acid modification agent, a (meth)acrylate ester. Thus, as used herein, the term "acid-modified polyolefin" is a concept encompassing an acryl-modified acid-modified polyolefin, and the term "acid-modified chlorinated polyolefin" is a concept encompassing an acryl-modified acid-modified chlorinated polyolefin. Thus, the acid-modified polyolefin includes, for example, ethylene-acrylate ester-maleic anhydride terpolymer, ethylene-methacrylate ester-maleic anhydride terpolymer, propylene-acrylate ester-maleic anhydride terpolymer, and propylene-methacrylate ester-maleic anhydride terpolymer. Specific examples of the (meth)acrylate ester for use in acryl modification are the same compounds as exemplified in relation to the acryl-modified polyolefin.

The acryl-modified polyolefin and the acryl-modified chlorinated polyolefin are preferably a polymer formed of a polyolefin which has been modified with a (meth)acrylate ester. Examples of the (meth)acrylate ester which is preferably used include at least one species selected from the group consisting of alkyl (meth)acrylate esters and cycloalkyl (meth)acrylate esters. Specific examples thereof include alkyl (meth)acrylate esters having a C1 to C8 alkyl group, which are exemplified in relation to the acrylic adhesive polymer; and alicyclic (meth)acrylate ester compounds and alkyl (meth)acrylate esters having a C≥9 alkyl group such as nonyl (meth)acrylate, decyl (meth)acrylate, lauryl (meth)acrylate, tridecyl (meth)acrylate, and stearyl (meth)acrylate, which are exemplified in relation to the additional monomer.

Each of the acid-modified polyolefin, the acid-modified chlorinated polyolefin, the acryl-modified polyolefin, and the acryl-modified chlorinated polyolefin may be a modified polymer modified with an additional modifying agent. Examples of the additional modifying agent include a functional group-containing alkyl (meth)acrylate ester, an aromatic vinyl compound, and cyclohexyl vinyl ether.

Examples of the functional group-containing alkyl (meth)acrylate ester include hydroxyethyl (meth)acrylate, hydroxypropyl (meth)acrylate, glycidyl (meth)acrylate, and an isocyanate-containing (meth)acrylate ester. Examples of the aromatic vinyl compound include benzyl (meth)acrylate, styrene, o-methylstyrene, p-methylstyrene, and α-methylstyrene. By employing the additional modifying agent in combination, percent modification by the modifying agent, and adhesion performance can be further enhanced.

The percent modification of the modified polymer is preferably 0.1% to 80%, from the viewpoint of improving adhesion performance of the adhesive layer at high temperature and room temperature in a well-balanced manner. From the viewpoint of enhancing interaction with the acrylic adhesive polymer and cohesive force of the entire adhesive layer, the percent modification of the modified polymer is more preferably 0.5% or higher, still more preferably 1.0% or higher, yet more preferably 1.5% or higher. Alternatively, the percent modification of the modified polymer may be 75% or lower, or 70% or lower. Notably, the percent modification of the modified polymer represents a ratio by mass of a moiety incorporated through modification reaction (i.e., a modification moiety) with respect to the mass of the entire modified polymer as 100 mass%. The mass of the modification moiety may be determined through Fourier transformation infrared spectroscopy or nuclear magnetic resonance spectroscopy.

The weight average molecular weight of the modified polymer, as determined through GPC, is preferably 3,000 to 500,000. When the weight average molecular weight of the modified polymer is 3,000 or higher, suitable heat resistance of the adhesive layer is achieved, whereas when the molecular weight is 500,000 or lower, solubility of the modified polymer in solvent increases, achieving excellent handling performance. Both cases are preferred. From the above viewpoint, the weight average molecular weight of the modified polymer is more preferably 5,000 or higher, still more preferably 10,000 or higher. The upper limit of the weight average molecular weight of the modified polymer is more preferably 250,000 or lower, still more preferably 200,000 or lower, yet more preferably 180,000 or lower.

When the modified polymer has a melting point, the melting point of the modified polymer is preferably 20°C or higher, more preferably 30°C or higher, still more preferably 40°C or higher, yet more preferably 50°C or higher, from the viewpoint of yielding an adhesive layer exhibiting excellent adhesion performance at high temperature. When the melting point of the modified polymer is excessively high, wettability to a bonding object decreases. From this viewpoint, the melting point of the modified polymer is preferably 130°C or lower, more preferably 120°C or lower, still more preferably 110°C or lower, yet more preferably 100°C or lower. The melting point of the modified polymer is a value obtained by means of a differential scanning calorimeter. Details of the measurement conditions are in accordance with the below-mentioned Examples.

A commercial product of the modified polymer may also be used. Examples the commercial product which may be in the invention include those employed in a plastic surface layer-improving agent, a primer for automobile plastic substrates, a primer for electronics substrates, and a primer for building materials. Specifically, examples of the commercial product of the acid-modified polyolefin include "Admer" series and "Unistole" series (products of Mitsui Chemicals, Inc.), "Hardlen" series (e.g., PMA-LE, PMA-L, PMA-LH, PMA-KE, PMA-K, PMA-KH, PMA-TE, PMA-T, PMA-TH, PMA-TZ, PMA-F6, PMA-F2, and PMA-F7) (products of Toyobo), "Umex" series (products of Sanyo Chemical Industries, Ltd.), and "Rexpearl" series (products of Japan Polyethylene Corporation).

Examples of the commercial product of the chlorinated polyolefin include Superchlon 814HA, 814HS, 390S, and 360T (products of Nippon Paper Industries Co., Ltd.) and Hardlen 13-LP, 13-LLP, 14-LWP, 15-LP, 16-LP, DX-523, DX-523P, DX-526P, and DX-530P (products of Toyobo).

Examples of the commercial product of the acid-modified chlorinated polyolefin include Superchlon 3228S and 2319S (products of Nippon Paper Industries Co., Ltd.) and Hardlen HM-21P, M-28P, CY-9124P, CY-1321P, CY-2121P, CY-2129, F-225P, F-2P, F-6P, and F-7P (products of Toyobo).

Examples of the commercial product of the acrylic acid-modified chlorinated polyolefin include Superchlon 224H and 240H (products of Nippon Paper Industries Co., Ltd.). Examples of the commercial product of the ethylene-acrylic acid-maleic anhydride terpolymer include "Bondine" series (product of Arkema). Examples of the commercial product of the acryl-modified polyolefin include S-7083S and S-7098S (products of Nippon Paper Industries Co., Ltd.) and Hardlen NP-3000, NP-3003, and NP-3002 (products of Toyobo).

The modified polymer content of the present composition is preferably 0.5 parts by mass to 50 parts by mass, with respect to the acrylic adhesive polymer content as 100 parts by mass. By adjusting the modified polymer content to fall within the above range, an adhesive layer exhibiting excellent adhesion performance at both room temperature and high temperature can be formed. From the viewpoint of yielding an adhesive layer exhibiting higher adhesion performance at high temperature, the modified polymer content, with respect to the acrylic adhesive polymer content as 100 parts by mass, is more preferably 1 part by mass or more, still more preferably 2 parts by mass or more, yet more preferably 5 parts by mass or more. The upper limit of the modified polymer content, with respect to the acrylic adhesive polymer content as 100 parts by mass, is more preferably 45 parts by mass or less, still more preferably 40 parts by mass or less, yet more preferably 35 parts by mass or less, from the viewpoint of securing adhesion performance at room temperature. Notably, such modified polymers may be used singly or in combination of two or more species.

·Solvent

As the solvent, an organic solvent that can dissolve the acrylic adhesive polymer and the modified polymer is preferably used. By use of the solvent, a solvent-type adhesive composition can be yielded. Specific examples of the organic solvent include an aprotic polar solvent, a phenol-type solvent, an alcohol-type solvent, an ester-type solvent, a ketone-type solvent, an ether-type solvent, an aromatic hydrocarbon-type solvent, and an aliphatic hydrocarbon-type solvent. These solvents may be used singly or in combination of two or more species as a mixture-type solvent.

Among them, the solvent is more preferably at least one species selected from the group consisting of an ester-type solvent, a ketone-type solvent, an aromatic hydrocarbon-type solvent, and an aliphatic hydrocarbon-type solvent. In one specific mode, an acrylic adhesive polymer and a modified polymer are dissolved in an organic solvent including one or more members of ethyl acetate, butyl acetate, ethyl methyl ketone, cyclohexane, methylcyclohexane, cyclohexanone, 4-methyltetrahydropyran, tetrahydropyran, tetrahydrofuran, and toluene, to thereby yield an adhesive composition suitable for forming an adhesive layer which has a phase separation between the acrylic adhesive polymer and the modified polymer.

No particular limitation is imposed on the solid concentration of the present composition (i.e., the ratio of the mass of the components in the adhesive composition other than the solvent with respect to the entire mass of the adhesive composition). The solid concentration is preferably 1 to 70 mass%. When the solid concentration is 1 mass% or higher, there can be formed an adhesive layer having a sufficient thickness. Also, when the solid concentration is 70 mass% or lower, suitable coatability can be secured, and an adhesive layer having a uniform thickness is easily formed. The solid concentration of the present composition is more preferably 5 to 50 mass%, still more preferably 10 to 45 mass%.

·Additional components

In accordance with needs, the present adhesive composition may further contain various components such as a polymer other than the acrylic adhesive polymer and the modified polymer and an additive (hereinafter may also be referred to as "additional components"). The additional components will next be described.

[Cross-linking agent]

When the acrylic adhesive polymer has a cross-linkable functional group, a cross-linking agent that can react with the cross-linkable functional group is incorporated into the adhesive composition, whereby adhesion performance at high temperature, heat resistance, and durability to temperature variation can be further enhanced, which is preferred. Also, in the course of formation of the adhesive layer, incorporation of a cross-linking agent is preferred, since formation of a cross-linking structure in the acrylic adhesive polymer facilitates phase separation into the modified polymer.

Examples of the cross-linking agent (curing agent) include a glycidyl compound having two or more glycidyl groups, an isocyanate compound having two or more isocyanate groups, an aziridine compound having two or more aziridinyl groups, an oxazoline compound having an oxazoline group, a metal chelate compound, and a butylated melamine compound. Of these, an isocyanate compound is preferred, by virtue of excellent adhesion characteristics under high temperature conditions.

Specific examples of the glycidyl compound as a cross-linking agent include poly-functional glycidyl compounds such as ethylene glycol diglycidyl ether, polyethylene glycol diglycidyl ether, propylene glycol diglycidyl ether, polypropylene glycol diglycidyl ether, 1,6-hexanediol diglycidyl ether, tetraglycidylxylenediamine, 1,3-bis(N,N-diglycidylaminomethyl)cyclohexane, and trimethylolpropane polyglycidyl ether.

Examples of the isocyanate compound which may be used in the invention include various poly-functional isocyanate compounds of aromatic type, aliphatic type, and alicyclic type, and modified products (e.g., prepolymers) of the poly-functional isocyanate compounds. Specific examples include aromatic isocyanate compounds such as diphenylmethane diisocyanate (MDI), tolylene diisocyanate (TDI), naphthalene diisocyanate (NDI), p-phenylene diisocyanate (PPDI), xylene diisocyanate (XDI), tetramethylxylylene diisocyanate (TMXDI), and tolidine diisocyanate (TODI); aliphatic isocyanate compounds such as hexamethylene diisocyanate (HDI) and lysine diisocyanate (LDI); alicyclic isocyanate compounds such as isophorone diisocyanate (IPDI), cyclohexyl diisocyanate (CHDI), hydrogenated XDI (H6XDI), and hydrogenated MDI (H12MDI); and modified isocyanate compound such as modified urethane, urethane dimer, urethane trimer, modified carbodiimide, modified urea, modified isocyanurate, modified oxazolidone, and isocyanate group-terminated prepolymer.

Examples of the aziridine compound include 1,6-bis(1-aziridinylcarbonylamino)hexane, 1,1'-(methylene-di-p-pneylene)bis-3,3-aziridyl urea, ethylenebis(2-aziridiny propionate), 2,4,6-triaziridinyl-1,3,5-triazine, and trimethyolpropane tris(2-aziridinylpropionate).

When a cross-linking agent is incorporated into the present composition, no particular limitation is imposed on the cross-linking agent content of the present composition. The cross-linking agent content, with respect to the acrylic adhesive polymer content as 100 parts by mass, is generally 0.01 to 10 parts by mass, preferably 0.03 to 5 parts by mass, more preferably 0.05 to 2 parts by mass.

[Tackifier]

The present composition may also contain a tackifier. Examples of the tackifier include rosin derivatives such as rosin ester, gum rosin, tall oil rosin, hydrogenated rosin ester, maleated rosin, and disproportionated rosin ester; terpene-based phenolic resin and terpene-based resins mainly formed from α-pinene, β-pinene, limonene, or the like; coumarone-indene resin; hydrogenated aromatic copolymer; phenolic resin; and vinyl polymer. The tackifier may be used singly or in combination of two or more species. The relative amount of the tackifier, with respect to the amount of the acrylic adhesive polymer as 100 parts by mass, is generally 0 to 30 parts by mass, preferably 0 to 20 parts by mass, more preferably 0 to 10 parts by mass.

[Plasticizer]

The present composition may also contain a plasticizer. Examples of the plasticizer include phthalate esters such as di(n-butyl) phthalate, di(n-octyl)phthalate, bis(2-ethylhexyl)phthalate, and di(n-decyl) phthalate; adipate esters such as bis(2-ethylhexyl) adipate, and di(n-octyl) adipate; sebacate esters; azelate esters; paraffins such as chlorinated paraffin; glycols such as polypropylene glycol; epoxy-modified vegetable oils such as epoxidized soy bean oil and epoxidized linseed oil; phosphate esters such as trioctyl phosphate and triphenyl phosphate; phosphite esters such as triphenyl phosphite; ester oligomers such as an ester product between adipic acid and 1,3-butylene glycol; low-molecular-weight polymers such as low-molecular-weight polybutene, low-molecular-weight polyisobutylene, and low-molecular-weight polyisoprene; and oils such as process oil and naphthene-base oil. The plasticizer content, with respect to the acrylic adhesive polymer content as 100 parts by mass, is preferably 0 to 20 parts by mass, more preferably 0 to 10 parts by mass, still more preferably 0 to 5 parts by mass.

In addition to the aforementioned cross-linking agent, tackifier, and plasticizer, examples of the further additive which may be added to the present composition include an anti-oxidant, a UV-absorber, an anti-aging agent, a flame-retardant, an antifungal agent, a silane coupling agent, a filler, a colorant, and an anti-static agent. The amount of the additive may be appropriately predetermined according to the type of compound, so long as the effects of the present disclosure are not impaired.

<Adhesive sheet and decorative film>

The adhesive sheet of the present disclosure (hereinafter may also be referred to as "the present sheet") has an adhesive layer formed from the present composition. Thus, in the adhesive layer belonging to the present sheet, the acrylic adhesive polymer and the modified polymer have undergone phase separation in a surface layer portion of the adhesive layer. The adhesive layer belonging to the present sheet and the adhesive composition for forming the sheet are described above. Thus, the present sheet is characterized in that, after attachment of the adhesive layer of the sheet to a molded body, peeling of the adhesive layer from the molded body is impeded at both room temperature and high temperature, and both room temperature adhesion performance and high temperature adhesion performance are excellent.

The adhesive sheet may have a configuration in which the adhesive layer is sandwiched by two separator sheets (i.e., a substrate-less mode), or may be attached to one surface of a bonding object serving as a substrate. In the substrate-less mode, the peel strength values of the two separator sheets may be identical to or different from each other. No particular limitation is imposed on the shape of the adhesive sheet, and the shape is modified in accordance with conditions of employment thereof. The adhesive sheet may be, for example, a single sheet, a roller form sheet, or a strip-form cut piece. The thickness of the adhesive layer may be appropriately tuned in accordance with the type of the bonding object, the area and shape of the bonding site, etc. In order to control the thickness of the adhesive layer of the adhesive sheet to a value of interest, a plurality of adhesive layers may be stacked to form an adhesive layer of the adhesive sheet.

The thus-obtained adhesive sheet of the present disclosure may be used as adhesive for a wide range of purposes. Specifically, the adhesive sheet may be used as an adhesive for various targets, including clothing articles (including miscellaneous clothing materials), sports goods (e.g., sportswear, sports shoes, sports gloves, and grip parts of bats and rackets), medical goods (e.g., supporter and corsets), interior and exterior automobile parts, outdoor goods, handicraft materials, toys, household goods, domestic articles, and furniture.

One preferred mode of the present sheet is a decorative film. Examples of the decorative film include a single-layer film in which a decorative layer is formed by coloring a substrate layer, and a laminate film in which a decorative layer and a substrate layer are stacked in that order. The decorative film having such a configuration is preferably used as a laminate mode decorative film, which provides a decorative molded body via attachment to a target object.

In the decorative film, the substrate layer is located at the outermost layer of a decorated adhesion object (i.e., a decorative molded body) after decoration of the adhesion object by the decorative film, to thereby serve as a protective layer of the decorative molded body. The material forming the substrate layer is preferably a material having flexibility. Thus, a resin material is preferred, with a thermoplastic resin being more preferred. No particular limitation is imposed on the thermoplastic resin. Examples of the thermoplastic resin include vinyl chloride (PVC) resin, polyester resin, acrylic resin, acrylonitrile-butadiene-styrene (ABS) resin, polycarbonate resin, polypropylene resin, and polyethylene resin. Of these, the substrate layer is preferably formed of at least one species selected from the group consisting of PVC resin, polyester resin, and ABS resin.

The thickness of the substrate layer is preferably 25 $\mu$m to 500 $\mu$m, more preferably 50 $\mu$m to 400 $\mu$m, still more preferably 100 to 300 $\mu$m. When the thickness of the substrate layer satisfies the above conditions, processability and moldability, shape following property, and handing performance are enhanced, in production of a decorative molded body through injection molding (also called insert molding), vacuum molding, vacuum press forming, or a similar technique.

The decorative layer is an ink layer provided with a design or a pattern (e.g., text, figure, or trademark) through printing or a similar technique. The decorative layer imparts a design to the decorative film. The design and pattern of the decorative layer may be formed through a known printing method such as gravure printing using a printing ink, offset printing, silk screen printing, transfer printing from a transfer sheet, sublimation transfer printing, or ink-jet printing. The thickness of the decorative layer is preferably 1 to 40 $\mu$m, more preferably 1 to 30 $\mu$m. When the thickness of the decorative layer satisfies the above conditions, a sufficient thickness for expressing a complex design such as gradation can be secured. The surface layer of the decorative film may be provided with an emboss pattern. The emboss pattern may be formed through, for example, transfer of an emboss pattern by means of an emboss roller. Also, a decorative function can also be imparted to the substrate layer or the adhesive layer by incorporating a pigment, a dye, a brightening agent, etc. to the substrate layer or the adhesive layer.

Notably, the decorative film before attaching to an object may further include, in addition to the adhesive layer, a release layer at the outermost surface on the adhesive layer side. The release layer prevents unintentional adhesion and is released from the decorative film in attaching the decorative film to an adhesion object. No particular limitation is imposed on the material forming the release layer. There may be used a resin material, including polyesters such as polyethylene terephthalate, polybutylene terephthalate, and polyethylene naphthalate; and polyolefins such as polypropylene and polyethylene. Alternatively, paper materials such as glassine paper, craft paper, and clay-coat paper may also be used. The thickness of the release layer may be adjusted to about 10 to about 400 μm.

Yet alternatively, the decorative film may have, before attaching to an adhesion object, a configuration which includes a release film having a release layer, and a hard-coating layer (a protective layer) and a decorative layer disposed on the release layer, wherein the decorative film is to be attached to the adhesion object by the mediation of an adhesive layer disposed on the decorative layer side. The decorative film having the above configuration is suitably used as a transfer film. Through employment of the decorative film of the configuration, there can be yielded a decorative molded body through a transfer method in which an assembly of the hard-coating layer to the adhesive layer is transferred to an adhesion object.

The hard-coating layer is preferably formed of a material that can undergo curing reaction or cross-linking reaction or both reactions by, for example, irradiation with an active energy ray, after being transferred to an adhesion object. Examples of the material forming the hard-coating layer include a polymer or an oligomer having a (meth)acryloyl group, an active energy ray-curable composition which has been converted to a semi-cured product through irradiation with an active energy ray at an appropriate dose, and an active energy ray-curable resin composition to which an isocyanate compound, a polyol resin, and the like are added and which has been cross-linked to an extent of interest. No particular limitation is imposed on the thickness of the hard-coating layer, and the thickness is, for example, about 1 to about 50 μm.

<Decorative molded body>

According to the present disclosure, there is provided a decorative molded body in which the aforementioned adhesive layer of the decorative film has been attached to a molded body. Since the decorative molded body is decorated by the decorative film having the adhesive layer formed from the present composition, partial delamination or peeling of the decorative film is suppressed at both room temperature and high temperature, thereby exhibiting excellent heat resistance and durability.

No particular limitation is imposed on the molded body to which the decorative film is attached. The raw molded body may be an article to which a decorative film can be attached, such as resin articles, metal articles, ceramic articles, and glass articles. Specific examples include household electric appliances such as domestic electrical appliance, electrical appliance for kitchen, health appliance, and seasonal electrical appliance; interior and exterior members of housing facility such as toilet, bath room, door, wall, etc.; automobile interior and exterior parts such as bumper, dashboard, door, roof, and hood; miscellaneous goods such as household goods and convenience goods; electronic parts; care and medical articles; and interior and exterior parts of ship and air craft. When the adhesion surface of the molded body to which the decorative film is attached is formed of a low-polarity material, the characteristics of the adhesive layer of the present disclosure; i.e., the effects of achieving high adhesion performance at both room temperature and high temperature, can be more suitably exerted. In particular, the adhesive layer can be suitably applied to a molded body having an adhesion surface formed of polypropylene.

The decorative molded body may be produced through vacuum molding, vacuum press forming, injection molding, or a similar technique. In vacuum molding, the decorative film is stretched under heating for softening, and the space on the decorative film on the molded body side is vacuumed, whereby the decorative film molded along the contour of the surface layer of the molded body, to thereby achieve adhesion. In vacuum press forming, after completion of a molding step of vacuum molding, the space on the opposite side is then pressed, whereby the decorative film molded along the contour of the surface layer of the molded body, to thereby achieve adhesion. Examples of the vacuum press forming machine include hot plate heating type pressure thermoforming machines (TFH series, products of Asano Laboratories Co., Ltd.), TOM machines (NGF series, products of Fu-se Vacuum Forming Ltd.), and NATS air heat transfer system (product of Navitas Co., Ltd.). In injection molding, the present decorative film is set in the cavity of a metal mold of the injection molding machine, and injection mold is conducted, whereby the decorative film molded along the contour of the surface layer of the molded body, to thereby achieve adhesion. Through any of the aforementioned methods, the present decorative molded body can be yielded.

Examples

The present disclosure will next be described in detail by way of Examples, which should not be construed as limiting the disclosure thereto. Unless otherwise specified, the units "part(s)" and "%" refer to "part(s) by mass" and

"mass%", respectively. The analytical methods of the polymers employed in the Examples are as follows.

<Measurement of molecular weight>

Weight average molecular weight (Mw) and number average molecular weight (Mn) (reduced to polystyrene) were determined by means of a gel permeation chromatograph (model "HLC-8320", product of TOHSO Corporation) under the following conditions.

·Measurement conditions

Column: TSKgel SuperMultipore HZ-M (product of TOHSO Corporation)×4
Column temperature: 40°C
Eluent: tetrahydrofuran
Detector: RI
Flow rate: 600 μL/min

<Measurement of glass transition temperature (Tg)>

The glass transition temperature (Tg) of a polymer was determined from the intersection point between the base line of a heat flux curve obtained through a differential scanning calorimeter (DSC) and a tangent point at the inflection point. The heat flux curve was obtained under the following temperature profile: cooling a sample (about 10 mg) to - 100°C, maintaining for 5 minutes, temperature elevating at 10°C/min to 300°C, then cooling to -100°C, maintaining for 5 minutes, and temperature elevating at 10°C/min to 350°C. Measurement apparatus: DSC6220 (product of SII Nanotechnology Inc.)

Atmosphere of measurement: nitrogen atmosphere

<Measurement of melting point (Tm)>

The melting point (Tm) of a modified or unmodified polyolefin was determined as a top of a melting peak in a heat flux curve obtained by means of a differential scanning calorimeter (DSC). The heat flux curve was obtained under the following temperature profile: cooling a sample (about 5 mg) to -70°C, maintaining for 5 minutes, temperature elevating at 10°C/min to 150°C, then cooling to -70°C, maintaining for 5 minutes, and temperature elevating at 10°C/min to 150°C.

Measurement apparatus: DSC6220 (product of SII Nanotechnology Inc.)
Atmosphere of measurement: nitrogen atmosphere

<Calculation of monomer compositional proportions of polymer>

The monomer compositional proportions of each of the produced polymers was calculated from the amounts of monomers used and the amount of monomer consumption determined by means of a gas chromatograph (GC).

<SP value>

The SP value of a polymer was calculated through the Fedors method, with a unit of $[cal/cm^3]^{1/2}$.

1. Synthesis of acrylic adhesive polymer

[Synthesis Example 1] (Synthesis of polymer A-1)

To a four-necked flask, methyl acrylate (hereinafter may also be abbreviated as "MA") (60 parts by mass), butyl acrylate (hereinafter may also be abbreviated as "BA") (35 parts by mass), 2-hydroxyethyl acrylate (hereinafter may also be abbreviated as "HEA") (5 parts by mass), and ethyl acetate (150 parts) were added. The contents of the flask were sufficiently degassed through bubbling with nitrogen gas, and the inside temperature of the liquid mixture was elevated to 75°C. As an initiator, 2,2'-azobis(2,4-dimethylbutyronitrile) ("V-65," product of FUJIFILM Wako Chemicals) (0.0252 parts by mass) was added thereto, and the mixture was caused to polymerize for 5 hours. The solid concentration was adjusted to 22% by further adding ethyl acetate, to thereby prepare a solution of a polymer A-1 in ethyl acetate. The thus-obtained polymer was found to be formed of MA (60 mass%), BA (35 parts by mass%), and HEA (5 mass%), and have Mn of 174,000, Mw of 806,000, and Mw/Mn of 4.6. Tg was -7°C, and the SP value was 10.57. Table 1 shows the composition of the polymer A-1 (proportions of raw materials), reaction conditions, and analytical results. The compositional proportions of the monomers forming the polymer A-1 were equivalent to those of starting monomers.

[Synthesis Examples 2 to 12] (Synthesis of polymers A-2 to A-12)

The procedure of Synthesis Example 1 was repeated, except that the type and amounts of raw materials fed to the flask, and reaction conditions were changed to those shown in Table 1, to thereby prepare a solution containing each of polymers A-2 to A-12. Regarding Synthesis Examples 7, 10, 11, and 12, the reaction conditions represented by "65°C3h - 75°C5h" refer to polymerization of the liquid mixture at 65°C for 3 hours, heating the reaction to 75°C, and reaction for 5 hours, in a sequential manner. Table 1 shows the analytical results of the obtained polymer. The compositional proportions of the monomers forming each of the polymers A-2 to A-12 were equivalent to those of starting monomers.

[Table 1]

| | Polymer name | Preparation (ratio by mass) | | | | | | | | | Reaction conditions | Mn | Mw | Mw/Mn | Tg | SP value |
|---|---|---|---|---|---|---|---|---|---|---|---|---|---|---|---|---|
| | | MA | BA | MEA | HEA | 4HBA | AA | HEMA | initiator | ethyl acetate | | | | | | |
| Synthesis Example 1 | A-1 | 60 | 35 | 0 | 5 | 0 | 0 | 0 | 0.0252 | 150 | 75 °C 5 h | 174000 | 806000 | 4.6 | - 7 °C | 10.47 |
| Synthesis Example 2 | A-2 | 30 | 25 | 40 | 5 | 0 | 0 | 0 | 0.0223 | 150 | 75 °C 5 h | 154000 | 841000 | 5.5 | **- 21 °C** | 10.39 |
| Synthesis Example 3 | A-3 | 0 | 17 | 78 | 5 | 0 | 0 | 0 | 0.0191 | 150 | 75 °C 5 h | 92000 | 800000 | 8.7 | - 35 °C | 10.27 |
| Synthesis Example 4 | A-4 | 0 | 75 | 22 | 3 | 0 | 0 | 0 | 0.0486 | 186 | 75 °C 5 h | 118000 | 478000 | 4.1 | - 41 °C | 9.98 |
| Synthesis Example 5 | A-5 | 0 | 48 | 47 | 5 | 0 | 0 | 0 | 0.0483 | 180 | 75 °C 5 h | 124000 | 546000 | 4.4 | - 37 °C | 10.15 |
| Synthesis Example 6 | A-6 | 0 | 48 | 47 | 5 | 0 | 0 | 0 | 0.0193 | 150 | 75 °C 5 h | 171000 | 794000 | 4.6 | - 37 °C | 10.15 |
| Synthesis Example 7 | A-7 | 0 | 17 | 78 | 0 | 5 | 0 | 0 | 0.0666 | 150 | 65 °C 3 h →75 °C 5 h | 91000 | 813000 | 8.9 | - 37 °C | 10.11 |
| Synthesis Example 8 | A-8 | 0 | 95 | 0 | 5 | 0 | 0 | 0 | 0.0487 | 186 | 75 °C 5 h | 87000 | 466000 | 5.4 | - 43 °C | 9.97 |
| Synthesis Example 9 | A-9 | 60 | 35 | 0 | 0 | 0 | 5 | 0 | 0.0257 | 150 | 75 °C 5 h | 237000 | 838000 | 3.5 | 6 °C | 10.59 |
| Synthesis Example 10 | A-10 | 0 | 17 | 78 | 0 | 0 | 5 | 0 | 0.0663 | 186 | 65 °C 3 h →75 °C 5 h | 155000 | 751000 | 4.8 | -36 °C | 10.43 |
| Synthesis Example 11 | A-11 | 0 | 17 | 78 | 0 | 0 | 0 | 5 | 0.0663 | 186 | 65 °C 3 h →75 °C 5 h | 127000 | 616000 | 4.9 | -37 °C | 10.05 |
| Synthesis Example 12 | A-12 | 10 | 7 | 78 | 5 | 0 | 0 | 0 | 0.0663 | 186 | 65 °C 3 h →75 °C 5 h | 138000 | 884000 | 6.4 | -35 °C | 10.36 |

EP 4 733 364 A1

The abbreviations of the monomers in Table 1 are as follows.

MA: methyl acrylate
BA: butyl acrylate
MEA: 2-methoxyethyl acrylate
HEA: 2-hydroxyethyl acrylate
4HBA: 4-hydroxybutyl acrylate
AA: acrylate
HEMA: 2-hydroxyethyl methacrylate

2. Synthesis of vinyl polymers

[Synthesis Example 13] (Synthesis of polymer B-1)

A liquid mixture of butyl acetate (200 parts by mass) with dimethyl-2,2'-azobis(2-methyl propionate) ("V-601," product of FUJIFILM Wako Chemicals, hereinafter may also be referred to simply as "V-601") (0.9 parts by mass) was put into a four-necked flask (capacity: 1 L). The contents of the flask were sufficiently degassed through bubbling with nitrogen gas, and the inside temperature of the liquid mixture was elevated to 90°C. Separately, methyl methacrylate (hereinafter may also be referred to as "MMA") (165 parts by mass), isobornyl methacrylate (hereinafter may also be referred to as "IBXMA") (44 parts by mass), V-601 (17 parts by mass), and butyl acetate (90 parts by mass) were mixed together, and the resultant liquid mixture was added dropwise through a dropping funnel to the flask over 5 hours, to thereby perform polymerization. After completion of dropwise addition, the polymerization solution was added dropwise to a solution mixture of methanol (4,800 parts by mass) and distilled water (1,200 parts by mass) so as to isolate a vinyl polymer in the polymerization solution, whereby a polymer B-1 is yielded. The compositional proportions of the monomers forming the polymer B-1, calculated from the amounts the monomers fed and the monomer consumption amount determined through GC, were found to be MMA 80 mass% and IBXMA 20 mass%. The polymer B-1 has a molecular weight (Mw) of 6,700 and a Tg of 108°C.

3. Production of modified or unmodified polyolefin [Synthesis Example 14] (Synthesis of modified polyolefin C-1)

To a four-necked flask (capacity: 300 mL), Tafmer XM-7090 (polyolefin, product of Mitsui Chemicals, Inc.) (100 parts), maleic anhydride (18.7 g), and t-butylbenzene (267 parts) were added. The contents of the flask were sufficiently degassed through bubbling with nitrogen gas, and the inside temperature of the mixture was elevated to 128°C under stirring, to thereby dissolve the polyolefin. To the resultant matter, a solution of dicumyl peroxide (Percumyl D, peroxide, product of NOF Corporation) in t-butylbenzene (3%, 8 parts as solid content) was added dropwise over 3 hours. After completion of dropwise addition, the mixture was continuously stirred for further 3 hours at the temperature maintained. The reaction mixture was allowed to cool, and then, ethyl acetate (1,000 parts) was added thereto. The precipitated white solid was removed through filtration, and the separated solid was suspended in acetone (1,000 parts). The suspension was twice subjected to filtration, to thereby remove impurity. The thus-obtained power was dried in vacuum at 60°C for 3 hours, to thereby yield a modified polyolefin C-1. Through GPC analysis, the modified polyolefin C-1 was found to have Mn of 29,000, Mw of 54,000, and Mw/Mn of 1.9. The melting point of the modified polyolefin C-1 was found to be 98°C. Further, the acid-modification degree of the polyolefin C-1, determined through nuclear magnetic resonance spectrometry (spectrometer: JNM-ECA400, $^1$H-NMR, product of JEOL), was 2.0%.

[Synthesis Examples 15 to 27]

The procedure of Synthesis Example 14 was repeated, except that the type and amounts of raw materials fed to the flask, and reaction conditions were changed to those shown in Table 2, to thereby produce modified polyolefins C-2, C-3, C-5 to C-14, and an unmodified polyolefin C-4. Notably, the amounts of maleic anhydride and peroxide in Table 2 correspond to the amounts (parts by mass) of the respective compounds with respect to the amount of the raw material polyolefin as 100 parts by mass.

[Table 2]

| | Modified/un modified polyolefin name | Raw material polyolefin | Maleic anhydride (parts) | Peroxide (parts) | Solvent | Reaction temperature (°C) | Mn | Mw | Mw/Mn | Modification degree (%) | Melting point (°C) |
|---|---|---|---|---|---|---|---|---|---|---|---|
| Synthesis Example 14 | C-1 | XM-7090 | 18.7 | 8 | tBB | 128 | 29,000 | 54,000 | 1.9 | 2.0 | 98 |
| Synthesis Example 15 | C-2 | XM-7090 | 18.7 | 8 | tBB | 128 | 28,000 | 54,000 | 1.9 | 2.0 | 97 |
| Synthesis Example 16 | C-3 | XM-7090 | 18.7 | 8 | tBB | 150 | 22,000 | 41,000 | 1.9 | 2.2 | 98 |
| Synthesis Example 17 | C-4 | XM-7090 | 0 | 8 | tBB | 150 | 42,000 | 99,000 | 2.3 | 0 | 91 |
| Synthesis Example 18 | C-5 | XM-7090 | 9.3 | 8 | tBB | 150 | 30,000 | 61,000 | 2.0 | 1.2 | 95 |
| Synthesis Example 19 | C-6 | XM-7090 | 18.7 | 8 | tBB | 165 | 21,000 | 40,000 | 1.9 | 1.9 | 97 |
| Synthesis Example 20 | C-7 | XM-7090 | 18.7 | 8 | xylene | 128 | 73,000 | 192,000 | 2.6 | 0.9 | 99 |
| Synthesis Example 21 | C-8 | XM-7090 | 18.7 | 8 | tBB | 150 | 20,000 | 39,000 | 1.9 | 2.2 | 98 |
| Synthesis Example 22 | C-9 | XM-7090 | 18.7 | 8 | tBB | 150 | 21,000 | 41,000 | 1.9 | 2.2 | 97 |
| Synthesis Example 23 | C-10 | XM-7090 | 18.7 | 8 | oDCB | 150 | 16,000 | 36,000 | 2.3 | 2.4 | 95 |
| Synthesis Example 24 | C-11 | XM-7090 | 18.7 | 8 | anisole | 150 | 17,000 | 41,000 | 2.3 | 2.1 | 97 |
| Synthesis Example 25 | C-12 | PMA-TE | 46.7 | 8 | tBB | 150 | 13,000 | 30,000 | 2.3 | 4.5 | 92 |
| Synthesis Example 26 | C-13 | L-MODU S901 | 18.7 | 8 | tBB | 150 | 12,000 | 22,000 | 1.9 | 2.7 | 82 |
| Synthesis Example 27 | C-14 | Vistamax x 3020FL | 18.7 | 8 | tBB | 150 | 13,000 | 25,000 | 2 | 6.2 | 76 |

The abbreviations of the polyolefin raw materials and solvents in Table 2 are as follows.

XM-7090: Tafmer XM-7090 (polyolefin, product of Mitsui Chemicals, Inc.)

PMA-TE: Hardlen PMA-TE (maleic anhydride-modified polyolefin, product of Mitsui Chemicals, Inc.), percent modification of 1.8%, melting point of 90°C, and Mw of 60,000)

L-MODU S901: polypropylene-based resin (product of Idemitsu Kosan Co., Ltd)

Vistamaxx 3020FL: (propylene-based elastomer, product of ExonMobile Japan)

tBB: t-butylbenzene

oDCB: o-dichlorobenzene

4. Production of adhesive composition and adhesive sheet

[Example 1]

A polymer PO-1, chlorinated polyolefin, percent modification of 31%, melting point of 60°C, Mw of 0.5 to 20,000, (360T, product of Nippon Paper Industries Co., Ltd.) was dissolved in ethyl acetate, to thereby prepare a polymer PO-1 solution having a solid concentration of 40 mass%. The solution was mixed with the polymer A-1 solution, to thereby prepare a polymer solution having a solid content of 22 mass%, containing the polymer A-1 (100 parts by mass) and the polymer PO-1 (30 parts by mass). To the solution, m-xylylene diisocyanate trimethylolpropane adduct (Takenate D-110N, solid concentration of 75 mass%, and isocyanate group content of 11.5%, product of Mitsui Chemicals, Inc.) (0.20 parts by mass) serving as a cross-linking agent was added with mixing, to thereby prepare an adhesive composition.
The thus-prepared adhesive composition was applied onto a separator having a thickness of 50 $\mu$m, made of polyethylene terephthalate (hereinafter may also be referred to simply as "PET") so that the thickness after drying was adjusted to 50 $\mu$m. The adhesive composition was dried at 80°C for 4 minutes, to thereby remove ethyl acetate. Another PET separator having a thickness of 38 $\mu$m and a peel strength differing from that of the aforementioned separator was attached, and the assembly was allowed to stand at 40°C for 5 days for aging, to thereby yield an adhesive sheet having double-sided separators.

[Examples 2 to 43 and Comparative Examples 1 to 6]

The procedure of Example 1 was repeated, based on the compositions and solid concentrations shown in Tables 3 to 8, to thereby produce respective adhesive compositions. Also, the procedure of Example 1 was repeated by use of each of the produced adhesive compositions, to thereby form an adhesive sheet having double-sided separators. Notably, regarding the the composition of the adhesive composition enclosed by the parentheses in Tables 3 to 8, the value represents a solid content (parts by mass) in the cases of acrylic adhesive polymer (BP), modified or unmodified polyolefin (PO), tackifier, and vinyl polymer, and an amount including a solvent (parts by mass) in the case of cross-linking agent.

5. Evaluation

Each of the produced adhesive sheets having double-sided separators (hereinafter may also be referred to as an "evaluation sheet") was subjected to various measurements and evaluations through the following procedures. Tables 3 to 8 show the results.

<Gel fraction>

An adhesive (0.2 g) was collected from an evaluation sheet, and the initial mass of the adhesive was weighed. The adhesive was immersed in ethyl acetate (50 g) and allowed to stand at room temperature for 16 hours. Thereafter, the mixture was filtered through a 200-mech metal wire gauze, and the residue on the mesh was dried at 80°C for 3 hours, followed by weighing. From the initial mass and the residual mass, gel fraction was calculated.

<Haze value>

One release film was peeled off from an evaluation sheet (thickness of adhesive layer: 50 $\mu$m) and transferred to

a glass plate (thickness: 1 mm), and the other release film was peeled off. The evaluation sheet was allowed to stand at 23°C and an RH of 50% for 1 day, and then the haze of the sheet was measured by means of a haze meter (model: COH7700, product of Nippon Denshoku Industries Co., Ltd.).

<Tg of entire adhesive layer>

The Tg of the entire adhesive layer formed from the adhesive composition was measured through DSC in accordance with JIS K7121 under the following conditions.

Measurement apparatus: Q-100 (product of TA Instrument)
Temperature elevation: 10°C/minute
Measurement atmosphere: nitrogen atmosphere

<Composition of surface layer portion of adhesive layer>

The ratio of the area of peak attributed to O1s to that to C1s was determined through X-ray photoelectron spectrometry (XPS) of an adhesive film sample. Based on the peak area ratio, the mass fraction of acrylic adhesive polymer ($W_A$) and that of modified polyolefin ($W_B$) with respect to the total mass of the acrylic adhesive polymer and the modified polyolefin were calculated. In Comparative Example 6, an unmodified polyolefin C-4 was used instead of the modified polyolefin, and the composition of the surface layer portion of the adhesive layer was calculated in the same manner.
XPS measurement was performed under the following conditions.

Apparatus: PHI5000 VersaProbe (product of Ulvac-Phi Incorporated)
X-ray: Al-K$\alpha$ (1,486.6 eV)
Sample incident angle of X-ray: 0° (angle to normal line of the measurement surface of the sample)
Photoelectron detection angle: 45° (angle to normal line of the measurement surface of the sample)

Each of the above mass fractions was calculated through the following specific procedure.
The ratio of oxygen atoms with respect to the total number of oxygen atoms and carbon atoms, calculated on the basis of the ratio of the area of peak attributed to O1s to that to C1s determined through XPS, corresponds to the ratio of oxygen atoms with respect to the total number of oxygen atoms and carbon atoms present in a unit area of the surface layer portion of the adhesive layer formed from the adhesive composition containing the acrylic adhesive polymer and the modified polyolefin. The feature is represented by the following numerical expression (4).

[NF2]

$$O_{A+B} = \frac{x \cdot N_{OA} + (1-x) \cdot N_{OB}}{N_C + N_O} \qquad \cdots \ (4)$$

In the above numerical expression, the variables are as follows.
$O_{A+B}$: Ratio of oxygen atoms with respect to the total number of oxygen atoms and carbon atoms, calculated on the basis of the ratio of the area of peak attributed to O1s to that to C1s determined through XPS of the adhesive layer obtained by drying adhesive composition

x: Volume fraction of acrylic adhesive polymer in the surface layer portion of adhesive layer
$N_{OA}$: Ratio of the number of oxygen atoms originating from the acrylic adhesive polymer with respect to the total number of oxygen atoms and carbon atoms present in a unit area of the surface layer portion of adhesive layer
$N_{OB}$: Ratio of the number of oxygen atoms originating from the modified polyolefin with respect to the total number of oxygen atoms and carbon atoms present in a unit area of the surface layer portion of adhesive layer
$N_C$: Number of carbon atoms in a unit area of the surface layer portion of adhesive layer
$N_O$: Number of oxygen atoms in a unit area of the surface layer portion of adhesive layer

Also, the ratio of oxygen atoms with respect to the total number of oxygen atoms and carbon atoms, calculated on the basis of the ratio of the area of peak attributed to O1s to that to C1s determined through XPS of a film formed by drying the acrylic adhesive polymer or the modified polyolefin as a single component, corresponds to the following numerical expression (5) or (6).

[NF3]

$$O_A = \frac{N_{OA}}{N_{CA} + N_{OA}} \quad \cdots \quad (5)$$

In the above numerical expression (5), the variables are as follows.

$O_A$: Ratio of oxygen atoms with respect to the total number of oxygen atoms and carbon atoms, calculated on the basis of the ratio of the area of peak attributed to O1s to that to C1s determined through XPS of a film formed by drying acrylic adhesive polymer
$N_{OA}$: Area of peak attributed to O1s determined through XPS of a film formed by drying acrylic adhesive polymer
$N_{CA}$: Area of peak attributed to C1s determined through XPS of a film formed by drying acrylic adhesive polymer

[NF4]

$$O_B = \frac{N_{OB}}{N_{CB} + N_{OB}} \quad \cdots \quad (6)$$

In the above numerical expression (6), the variables are as follows.

$O_B$: Ratio of oxygen atoms with respect to the total number of oxygen atoms and carbon atoms, calculated on the basis of the ratio of the area of peak attributed to O1s to that to C1s determined through XPS of a film formed by drying modified polyolefin
$N_{OB}$: Area of peak attributed to O1s determined through XPS of a film formed by drying modified polyolefin
$N_{CB}$: Area of peak attributed to C1s determined through XPS of a film formed by drying modified polyolefin

Assuming that the density of the acrylic adhesive polymer is approximately equal to that of the modified polyolefin, and the following approximations:

$$N_C + N_O = N_{CA} + N_{OA} = N_{CB} + N_{OB}$$

$x = W_A$ are established, the following numerical expression (7) is derived from the above numerical expressions (4) to (6). Thus, the mass fraction $W_A$ of the acrylic adhesive polymer is calculated.

[NF5]

$$O_{A+B} = W_A \cdot O_A + (1 - W_A) \cdot O_B \quad \cdots \quad (7)$$

From the above-obtained $W_A$ and the following numerical expression (8), the mass fraction ($W_B$) of the modified polyolefin is calculated.

$$W_B = 1 - W_A \quad \cdots \quad (8)$$

In the above numerical expression (8), the variables are as follows.

$W_A$: Mass fraction of acrylic adhesive polymer
$W_B$: Mass fraction of modified polyolefin

In Example 13, the values of the variables in the numerical formula (7) are as follows.

$O_{A+B}$: 10.1 (measured value)
$O_A$: 31.5 (measured value)
$O_B$: 1.6 (measured value)

By inputting these values into the above numerical formula (4), $W_A=0.284$ and $W_B=0.716$ were obtained.

<Modified polyolefin concentration of entire adhesive layer and modified polyolefin concentration of surface layer portion of adhesive layer>

The ratio (unit: %) by mass of the modified polyolefin with respect to the total mass of the acrylic adhesive polymer and the modified polyolefin used for preparing the adhesive composition was calculated, and the ratio was employed as a modified polyolefin concentration of the entire adhesive layer (hereinafter may also be referred to as an "adhesive layer PO concentration"). Also, $W_B$ (represented by %) obtained through calculation from XPS measurements of each adhesive film sample was employed as a modified polyolefin concentration of the surface layer portion of the adhesive layer (hereinafter may also be referred to as a "surface PO concentration"). Further, by dividing surface PO concentration by adhesive layer PO concentration, the ratio of surface PO concentration to adhesive layer PO concentration (i.e., PO concentration ratio) was calculated.

<Peel test>

An evaluation sheet (thickness of adhesive layer: 50 $\mu$m) was transferred to a PET film (125 $\mu$m) which had been subjected to adhesion facilitation treatment, to thereby prepare a sheet for use in the peel test. The peel test sheet was attached to a polypropylene (PP) plate (PP-N-BN, product of Resonac Holdings Corporation, thickness: 2 mm), and the assembly was pressed by means of a precision thermal pressing machine (product of Shintokogio, Ltd.) at 120°C and 0.8 MPa for 20 seconds, to thereby prepare peel test pieces. Each peel test piece was subjected to a test by means of a tensile tester equipped with a thermostat bath (Strograph R, product of Toyo Seiki Seisaku-sho, Ltd.) at 23°C and 85°C. The test was performed at a peeling rate of 300 mm/minute and according to the "Adhesion tape & adhesion sheet test method" as stipulated in JIS Z-0237. The peel strength at 180° to the adhesive sheet was measured, to thereby provide a peel strength at each measurement temperature.

[Table 3]

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| BP | | A-1 (100) | A-1 (100) | A-1 (100) | A-2 (100) | A-2 (100) | A-2 (100) | A-3 (100) | A-3 (100) | A-3 (100) | A-3 (100) |
| PO | | PO-1 (30) | PO-6 (10) | PO-11 (7) | PO-5 (10) | PO-6 (10) | PO-7 (10) | PO-2 (10) | PO-8 (10) | PO-9 (10) | PO-10 (10) |
| Tackifier KE-311 | | | | | | | | | | | |
| Vinyl polymer B-1 | | | | | | | | | | | |
| Cross-linling agent | D-110N | 0.20 | 0.20 | | 0.20 | 0.20 | 0.20 | 0.20 | 0.20 | 0.20 | 0.20 |
| | D-101E | | | 0.14 | | | | | | | |
| | Tetrad-C | | | | | | | | | | |
| | Tetrad-X | | | | | | | | | | |
| Solvent | | ethyl acetate | toluene | Tol/CH | toluene | toluene | toluene | toluene | toluene | toluene | toluene |
| Solid concentration (%) | | 22 | 25 | 20 | 25 | 25 | 25 | 25 | 24 | 24 | 24 |
| Gel fraction (%) | | 73.9 | 70.7 | 83.7 | 73.5 | 62.1 | 66.8 | 70.3 | 73.4 | 65.3 | 68.5 |
| Tg of adhesive layer (°C) | | -4 | -6 | -6 | -21 | -22 | -21 | -35 | -35 | -35 | -35 |
| Adhesive layer PO concentration (%) | | 23 | 9 | 7 | 9 | 9 | 9 | 9 | 9 | 9 | 9 |
| Surface PO concentration (%) | | 100 | 59 | 72 | 47 | 24 | 61 | 23 | 29 | 26 | 27 |
| PO concentration ratio | | 4.3 | 6.6 | 10.3 | 5.2 | 2.7 | 6.8 | 2.6 | 3.2 | 2.9 | 3.0 |
| Haze (%) | | 59.9 | 4.0 | 18.6 | 4.8 | 5.7 | 35.0 | 48.2 | 32.3 | 34.2 | 31.5 |
| PP peel strength | 23 °C | 23.5 | 26.8 | 24.7 | 23.1 | 28.8 | 22.3 | 36.8 | 33.7 | 29.1 | 30.5 |
| | 85 °C | 11.6 | 14.7 | 21.0 | 13.2 | 10.8 | 16.5 | 12.8 | 11.5 | 9.3 | 9.2 |

[Table 4]

| | | Example 11 | Example 12 | Example 13 | Example 14 | Example 15 | Example 16 | Example 17 | Example 18 | Example 19 | Example 20 |
|---|---|---|---|---|---|---|---|---|---|---|---|
| BP | | A-3 (100) | A-3 (100) | A-3 (100) | A-3 (100) | A-3 (100) | A-3 (100) | A-3 (100) | A-3 (100) | A-4 (100) | A-5 (100) |
| PO | | PO-7 (10) | PO-7 (15) | PO-11 (7) | PO-11 (7) | PO-12 (7) | PO-13 (7) | PO-14 (7) | PO-11 (4) | PO-7 (10) | PO-7 (10) |
| Tackifier KE-311 | | | | | | | | | | | |
| Vinyl polymer B-1 | | | | | | | | | | | |
| Cross-linling agent | D-110N | 0.20 | 0.20 | 0.20 | | 0.20 | 0.20 | 0.20 | 0.20 | 0.24 | 0.40 |
| | D-101E | | | | 0.14 | | | | | | |
| | Tetrad-C | | | | | | | | | | |
| | Tetrad-X | | | | | | | | | | |
| Solvent | | toluene | toluene | Tol/CH | Tol/CH | Tol/CH | Tol/CH | Tol/CH | Tol/CH | toluene | toluene |
| Solid concentration (%) | | 25 | 25 | 20 | 20 | 25 | 25 | 25 | 25 | 25 | 25 |
| Gel fraction (%) | | 76.7 | 75.3 | 84.0 | 61.9 | 70.5 | 68.9 | 73.8 | 77.5 | 66.3 | 70.8 |
| Tg of adhesive layer (°C) | | -34 | -34 | -33 | -33 | -33 | -34 | -33 | -33 | -40 | -38 |
| Adhesive layer PO concentration (%) | | 9 | 13 | 7 | 7 | 7 | 7 | 7 | 4 | 9 | 9 |
| Surface PO concentration (%) | | 33 | 50 | 72 | 83 | 24 | 25 | 34 | 40 | 26 | 67 |
| PO concentration ratio | | 3.7 | 3.8 | 10.3 | 11.9 | 3.4 | 3.6 | 4.9 | 10.0 | 2.9 | 7.4 |
| Haze (%) | | 25.7 | 30.3 | 20.7 | 19.2 | 19.8 | 20.4 | 18.5 | 16.1 | 43.4 | 48.9 |
| PP peel strength | 23 °C | 49.5 | 56.0 | 57.0 | 50.4 | 22.4 | 24.3 | 31.9 | 32.0 | 37.3 | 43.1 |
| | 85 °C | 11.2 | 9.8 | 20.3 | 18.2 | 12.8 | 9.9 | 13.9 | 9.7 | 8.9 | 14.4 |

[Table 5]

| | | Example 21 | Example 22 | Example 23 | Example 24 | Example 25 | Example 26 | Example 27 | Example 28 | Example 29 | Example 30 |
|---|---|---|---|---|---|---|---|---|---|---|---|
| BP | | A-5 (100) | A-6 (100) | A-7 (100) | A-9 (100) | A-10 (100) | A-11 (100) | A-12 (100) | A-3 (100) | A-3 (100) | A-3 (100) |
| PO | | PO-7 (4) | PO-7 (10) | PO-7 (10) | PO-7 (10) | PO-11 (7) | PO-11 (7) | PO-11 (7) | C-1 (7) | C-2 (7) | C-3 (7) |
| Tackifier KE-311 | | | | | | | | | | | |
| Vinyl polymer B-1 | | | | | | | | | | | |
| Cross-linling agent | D-110N | 0.40 | 0.20 | 0.20 | 0.20 | | | | | | |
| | D-101E | | | | | 0.14 | 0.28 | 0.14 | 0.14 | 0.14 | 0.14 |
| | Tetrad-C | | | | | | | | | | |
| | Tetrad-X | | | | | | | | | | |
| Solvent | | toluene | toluene | toluene | toluene | Tol/CH | Tol/CH | Tol/CH | Tol/CH | Tol/CH | Tol/CH |
| Solid concentration (%) | | 25 | 25 | 25 | 22 | 20 | 20 | 20 | 20 | 20 | 20 |
| Gel fraction (%) | | 81.3 | 67.3 | 70.9 | 69.5 | 62.4 | 78.5 | 56.0 | 70.3 | 69.6 | 72.1 |
| Tg of adhesive layer (°C) | | -39 | -38 | -36 | 6 | -36 | -35 | -37 | -33 | -32 | -33 |
| Adhesive layer PO concentration (%) | | 4 | 9 | 9 | 9 | 7 | 7 | 7 | 7 | 7 | 7 |
| Surface PO concentration (%) | | 15 | 28 | 27 | 52 | 63 | 69 | 81 | 72 | 70 | 64 |
| PO concentration ratio | | 3.8 | 3.1 | 3.0 | 5.8 | 9.0 | 9.9 | 11.6 | 10.3 | 10.0 | 9.1 |
| Haze (%) | | 19.5 | 37.4 | 18.4 | 33.1 | 18.6 | 23.5 | 21.9 | 8.9 | 5.8 | 8.0 |
| PP peel strength | 23 °C | 33.9 | 51.8 | 47.9 | 25.9 | 27.1 | 42.1 | 30.8 | 55.6 | 54.2 | 62.6 |
| | 85 °C | 9.6 | 10.4 | 10.8 | 18.8 | 13.3 | 9.8 | 20.9 | 15.8 | 12.3 | 12.9 |

EP 4 733 364 A1

29

[Table 6]

| | | Example 31 | Example 32 | Example 33 | Example 34 | Example 35 | Example 36 | Example 37 | Example 38 | Example 39 | Example 40 |
|---|---|---|---|---|---|---|---|---|---|---|---|
| BP | | A-3 (100) | A-3 (100) | A-3 (100) | A-3 (100) | A-3 (100) | A-3 (100) | A-3 (100) | A-3 (100) | A-3 (100) | A-3 (100) |
| PO | | C-5 (7) | C-6 (7) | C-7 (7) | C-8 (7) | C-9 (7) | C-10 (7) | C-11 (7) | C-12 (7) | C-13 (7) | C-14 (7) |
| Tackifier KE-311 | | | | | | | | | | | |
| Vinyl polymer B-1 | | | | | | | | | | | |
| Cross-linling agent | D-110N | | | | | | | | | | |
| | D-101E | 0.14 | 0.14 | 0.14 | 0.14 | 0.14 | 0.14 | 0.14 | 0.14 | 0.14 | 0.14 |
| | Tetrad-C | | | | | | | | | | |
| | Tetrad-X | | | | | | | | | | |
| Solvent | | Tol/CH | Tol/CH | Tol/CH | Tol/CH | Tol/CH | Tol/CH | Tol/CH | Tol/CH | toluene | toluene |
| Solid concentration (%) | | 20 | 20 | 20 | 20 | 20 | 20 | 20 | 20 | 20 | 20 |
| Gel fraction (%) | | 68.9 | 65.4 | 60.3 | 65.8 | 70.1 | 69.3 | 63.2 | 72.5 | 68.3 | 75.6 |
| Tg of adhesive layer (°C) | | -34 | -32 | -33 | -31 | -34 | -35 | -33 | -32 | -33 | -33 |
| Adhesive layer PO concentration (%) | | 7 | 7 | 7 | 7 | 7 | 7 | 7 | 7 | 7 | 7 |
| Surface PO concentration (%) | | 68 | 74 | 56 | 81 | 85 | 79 | 82 | 86 | 88 | 85 |
| PO concentration ratio | | 9.7 | 10.6 | 8.0 | 11.6 | 12.1 | 11.3 | 11.7 | 12.3 | 12.6 | 12.1 |
| Haze (%) | | 10.0 | 7.0 | 15.5 | 6.4 | 8.6 | 7.0 | 9.0 | 5.0 | 5.0 | 3.2 |
| PP peel strength | 23 °C | 53.9 | 51.9 | 21.5 | 52.3 | 55.7 | 59.7 | 50.2 | 36.2 | 59.3 | 30.4 |
| | 85 °C | 19.4 | 18.2 | 11.2 | 14.6 | 16.7 | 18.0 | 19.0 | 16.6 | 10.6 | 14.2 |

EP 4 733 364 A1

[Table 7]

| | | | Example 41 | Example 42 | Example 43 |
|---|---|---|---|---|---|
| BP | | | A-3 (100) | A-9 (100) | A-10 (100) |
| PO | | | PO-11 (1) | PO-11 (8) | PO-12 (3) |
| Tackifier KE-311 | | | | | |
| Vinyl polymer B-1 | | | | | |
| Cross-linling agent | | D-110N | 0.20 | | |
| | | D-101E | | | |
| | | Tetrad-C | | 0.03 | |
| | | Tetrad-X | | | 0.02 |
| Solvent | | | Tol/CH | Tol/CH | Tol/CH |
| Solid concentration (%) | | | 25 | 22 | 20 |
| Gel fraction (%) | | | 89.0 | 72.1 | 65.7 |
| Tg of adhesive layer (°C) | | | -33 | 6 | -36 |
| Adhesive layer PO concentration (%) | | | 1 | 7 | 3 |
| Surface PO concentration (%) | | | 17 | 72 | 63 |
| PO concentration ratio | | | 17.0 | 10.3 | 21.0 |
| Haze (%) | | | 12.5 | 32.6 | 19.2 |
| PP peel strength | | 23 °C | 23.2 | 24.3 | 26.4 |
| | | 85 °C | 8.9 | 18.2 | 14.3 |

[Table 8]

| | | Comparative Example 1 | Comparative Example 2 | Comparative Example 3 | Comparative Example 4 | Comparative Example 5 | Comparative Example 6 |
|---|---|---|---|---|---|---|---|
| BP | | A-3 (100) | A-3 (100) | A-3 (100) | A-8 (100) | A-4 (100) | A-3 (100) |
| PO | | | | | PO-3 (10) | PO-1 (2) | C-4 (7) |
| Tackifier KE-311 | | | 10 | | | | |
| Vinyl polymer B-1 | | | | 8 | | | |
| Cross-linling agent | D-110N | 0.20 | 0.20 | 0.20 | 0.40 | 0.40 | |
| | D-101E | | | | | | 0.20 |
| | Tetrad-C | | | | | | |
| | Tetrad-X | | | | | | |
| Solvent | | ethyl acetate | ethyl acetate | ethyl acetate | ethyl acetate | ethyl acetate | Tol/CH |
| Solid concentration (%) | | 25 | 25 | 25 | 25 | 25 | 20 |
| Gel fraction (%) | | 73.4 | 73.5 | 70.3 | 58.4 | 73.6 | 71.5 |
| Tg of adhesive layer (°C) | | -35 | - | -28 | -38 | -41 | -35 |
| Adhesive layer PO concentration (%) | | 0 | 0 | 0 | 9 | 2 | 71.5 |
| Surface PO concentration (%) | | - | - | - | 11 | 2 | 7 |

(continued)

|  |  | Comparative Example 1 | Comparative Example 2 | Comparative Example 3 | Comparative Example 4 | Comparative Example 5 | Comparative Example 6 |
|---|---|---|---|---|---|---|---|
| PO concentration ratio |  | - | - | - | 1.2 | 1.0 | 0.1 |
| Haze (%) |  | 0.4 | 0.3 | 0.7 | 0.4 | 0.8 | 17.1 |
| PP peel strength | 23 °C | 4.4 | 19.2 | 4.5 | 14.1 | 15.2 | 3.9 |
|  | 85°C | 0.1 | 0.2 | 5.4 | 0.6 | 0.3 | 0.2 |

The abbreviations of modified or unmodified polyolefins (PO), additives, and solvents in Tables 3 to 8 are as follows. "BP" represents acrylic adhesive polymers A-1 to A-12 produced in Synthesis Examples 1 to 12.

PO-1: 360T (chlorinated polyolefin, percent modification of 31%, melting point of 60°C, and Mw of 0.5 to 20,000, product of Nippon Paper Industries Co., Ltd.)
PO-2: 14-WL-P (chlorinated polyolefin, percent modification of 27%, melting point of 80°C, and Mw of 40,000, product of Toyobo)
PO-3: Superchlon 814HS (chlorinated polypropylene, percent modification of 41%, melting point of 60°C, and Mw of 10,000 to 30,000, product of Nippon Paper Industries Co., Ltd.)
PO-4: DX-523P (chlorinated polyolefin, percent modification of 23%, melting point of 84°C, and Mw of 100,000, product of Toyobo)
PO-5: S-7083S (acryl-modified polyolefin, percent modification of 20%, melting point of 72°C, and Mw of 30,000, product of Nippon Paper Industries Co., Ltd.)
PO-6: S-7098S (acryl-modified polyolefin, percent modification of 70%, melting point of 62°C, and Mw of 60,000, product of Nippon Paper Industries Co., Ltd.)
PO-7: Hardlen HM-21P (maleic anhydride-modified chlorinated polyolefin, percent modifications: chlorinated percent modification of 21% and percent maleic anhydride-modification of 1.6%, melting point of 85°C, and Mw of 45,000, product of Toyobo)
PO-8: 3221S (chlorinated polyolefin, percent modification of 21%, melting point of 55°C, Mw of 40,000, product of Nippon Paper Industries Co., Ltd.)
PO-9: 3228S (chlorinated polyolefin, percent modification of 28%, melting point of 61°C, and Mw of 40,000, product of Nippon Paper Industries Co., Ltd.)
PO-10: CY-2321P (maleic anhydride-modified chlorinated polyolefin, percent modification of 21%, melting point of 56°C, and Mw of 45,000, product of Toyobo)
PO-11: Hardlen PMA-TE (maleic anhydride-modified polyolefin, percent modification of 1.8%, melting point of 90°C, and Mw of 60,000, product of Toyobo)
PO-12: Hardlen PMA-T (maleic anhydride-modified polyolefin, percent modification of 1.5%, melting point of 90°C, and Mw of 75,000, product of Toyobo)
PO-13: Hardlen PMA-TH (maleic anhydride-modified polyolefin, percent modification of 1.0%, melting point of 90°C, and Mw of 90,000, product of Toyobo)
PO-14: Hardlen PMA-TZ (maleic anhydride-modified polyolefin, percent modification of 1.4%, melting point of 90°C, and Mw of 115,000, product of Toyobo)
C-1 to C-14: Modified or unmodified polyolefins produced in Synthesis Examples 14 to 27
Tackifier KE-311: "KE-311" (a rosin ester, softening point of 90 to 100°C, product of Arakawa Chemical Industries, Ltd.)
Vinyl polymer B-1: vinyl polymer B-1 produced in Synthesis Example 13
Cross-linking agent D-110N: Takenate D-110N (m-xylylene diisocyanate trimethylolpropane modified product, solid concentration of 75 mass%, and an NCO content of 11.5%, product of Mitsui Chemicals, Inc.)
Cross-linking agent D-101E: Takenate D-101E (tolylene diisocyanate trimethylolpropane modified product, solid concentration of 75%, and an NCO content of 13.3%, product of Mitsui Chemicals, Inc.)
Tol/CH: Solvent mixture of toluene and cyclohexane (ratio by mass of Tol/CH=75:25)
Cross-linking agent Tetrad-C: TETRAD-C (1,3-bis(N,N-diglycidylaminomethyl)cyclohexane, product of Mitsubishi Gas Chemical Company, Inc.)
Cross-linking agent Tetrad-X: TETRAD-X (tetraglycidylxylene diamine, product of Mitsubishi Gas Chemical Company, Inc.)

As is clear from Tables 3 to 8, the adhesive sheets of Examples 1 to 43 each having an adhesive layer in which the acrylic adhesive polymer and the modified polyolefin undergo phase separation were found to exhibit high peel strength to a PP plate at 23°C and 80°C, indicating suitable adhesion performance at both room temperature and high temperature.

In contrast, the adhesive sheets of Comparative Examples 1 to 6 were found to exhibit a low haze value lower than 1.0, indicating that no polymer phase separation was evoked in the adhesive layer. In the evaluation results of the adhesive sheets of Comparative Examples 1 to 6, the adhesive sheet of Comparative Example 1, to which no modified polyolefin was added, but only an acrylic adhesive polymer was added, was found to exhibit low peel strength at both room temperature and high temperature. The adhesive sheet of Comparative Example 2, to which a tackifier was added instead of modified polyolefin, was found to exhibit a comparatively high peel strength at room temperature, but a lower peel strength at high temperature, as compared with Examples 1 to 43, indicating poor adhesion performance at high temperature. The adhesive sheet of Comparative Example 3, to which the vinyl polymer B-1 was added instead of modified polyolefin, was found to exhibit a comparatively high peel strength at high temperature, but a lower peel strength at room temperature, as compared with Examples 1 to 43, indicating poor adhesion performance at room temperature. The adhesive sheets of Comparative Examples 4 and 5, exhibiting no phase separation into the acrylic adhesive polymer and the modified polyolefin in each adhesive layer proven by the haze values, were found to exhibit low peel strength at both room temperature and high temperature. Also, the adhesive sheet of Comparative Example 6, to which the unmodified polyolefin was added instead of modified polyolefin, was found to exhibit a low peel strength at both room temperature and high temperature.

<Microscopic observation of surface layer portion of adhesive layer>

In order to confirm whether phase separation into the acrylic adhesive polymer and the modified polyolefin in the adhesive layer of the adhesive sheets of Examples 1 to 43 was evoked from images, the adhesive composition of each Example was applied onto a PET separator and heated at 80°C for removing solvent, to thereby form an adhesive layer having a film thickness of 50 $\mu$m. The surface layer portion of the adhesive layer was observed under a scanning probe microscope. Fig. 1 shows an image of a surface layer portion of the adhesive layer of Example 13 observed under a scanning probe microscope.

As shown in Fig. 1, in the surface layer portion of the adhesive layer formed from the adhesive composition of Example 13, a P1 phase mainly formed of the acrylic adhesive polymer and a P2 phase mainly formed of the modified polyolefin were found to be co-present, indicating that phase separation into the acrylic adhesive polymer and the modified polyolefin was evoked. In contrast, when the surface layer portion of each of the adhesive layers of Comparative Examples 1 to 6 was observed under a scanning probe microscope, no phase separation into the acrylic adhesive polymer and the modified polyolefin was observed. Fig. 2 shows an image of a surface layer portion of the adhesive layer of Comparative Example 4 observed under a scanning probe microscope.

From the aforementioned evaluation results, there has been proven that the adhesive layer in which phase separation into the acrylic adhesive polymer and the modified polyolefin has been evoked can provide enhanced adhesion performance at both room temperature and high temperature.

The present invention is not limited to the aforementioned embodiments and includes various variations and those falling within the scope of equivalent, so long as they do not deviate from the gist of the invention. Thus, those skilled in the art should understand that various combinations and embodiments with reference to the above, and further, another combination or embodiment to which only a single element or one or more elements have been added are also encompassed within the scope and concept of the present invention.

Description of Reference Numerals

P1   first phase
P2   second phase

**Claims**

1.  An adhesive sheet comprising an adhesive layer, wherein
    the adhesive layer comprises an acrylic adhesive polymer and a modified polymer which is at least one species selected from the group consisting of a modified polyolefin and a modified polydiene, and the acrylic adhesive polymer and the modified polymer have undergone phase separation in a surface layer portion of the adhesive layer.

2.  The adhesive sheet according to claim 1, wherein the modified polymer concentration is higher in the surface layer portion of the adhesive layer than in the entire adhesive layer.

3. The adhesive sheet according to claim 1 or 2, wherein the modified polymer concentration of the surface layer portion of the adhesive layer, as determined through X-ray photoelectron spectrometry, is 1.5 times or more the modified polymer concentration of the entire adhesive layer.

4. The adhesive sheet according to claim 1 or 2, wherein the adhesive layer has a haze of 3.0% or higher when the thickness of the adhesive layer is 50 μm.

5. The adhesive sheet according to claim 1 or 2, wherein the modified polymer is at least one species selected from the group consisting of an acid-modified polyolefin, a chlorinated polyolefin, an acid-modified chlorinated polyolefin, an acryl-modified polyolefin, and an acryl-modified chlorinated polyolefin.

6. The adhesive sheet according to claim 1 or 2, wherein the modified polymer has been modified with at least one species selected from the group consisting of a carboxylic acid, a carboxylic anhydride, and a (meth)acrylate ester.

7. The adhesive sheet according to claim 1 or 2, wherein the modified polymer has a percent modification of 80% or less.

8. The adhesive sheet according to claim 1 or 2, wherein the modified polymer has a melting point of 20°C to 130°C.

9. The adhesive sheet according to claim 1 or 2, which is a decorative film.

10. An adhesive sheet comprising an adhesive layer, wherein
the adhesive layer comprises an acrylic adhesive polymer and a modified polymer which is at least one species selected from the group consisting of a modified polyolefin and a modified polydiene, and the adhesive layer has a haze of 3.0% or higher when the thickness of the adhesive layer is 50 μm.

11. An adhesive composition which comprises an acrylic adhesive polymer, a modified polymer which is at least one species selected from the group consisting of a modified polyolefin and a modified polydiene, and a solvent, and which is used for forming an adhesive layer, wherein
phase separation into the acrylic adhesive polymer and the modified polymer occurs in the course of forming the adhesive layer on a substrate by applying the adhesive composition onto the substrate and removing the solvent.

12. The adhesive composition according to claim 11, wherein a surface layer portion of the adhesive layer has a modified polymer concentration higher than the modified polymer concentration of the entire adhesive layer.

13. The adhesive composition according to claim 11 or 12, wherein the modified polymer concentration of the surface layer portion of the adhesive layer, as determined through X-ray photoelectron spectrometry, is 1.5 times or more the modified polymer concentration of the entire adhesive layer.

14. The adhesive composition according to claim 11 or 12, wherein the adhesive layer has a haze of 3.0% or higher when the thickness of the adhesive layer is 50 μm.

15. The adhesive composition according to claim 11 or 12, wherein the acrylic adhesive polymer has a glass transition temperature of -40°C or higher.

16. The adhesive composition according to claim 11 or 12, wherein the acrylic adhesive polymer has a weight average molecular weight of 450,000 or higher.

17. The adhesive composition according to claim 11 or 12, wherein the acrylic adhesive polymer comprises a structural unit derived from at least one species selected from the group consisting of an alkyl (meth)acrylate ester comprising a C1 to C3 alkyl group and an alkoxyalkyl (meth)acrylate ester comprising a C3 or C4 alkoxyalkyl group in a relative amount of 30 mass% or more, with respect to all the structural units comprised in the acrylic adhesive polymer.

18. The adhesive composition according to claim 11 or 12, wherein the acrylic adhesive polymer comprises a structural unit derived from an amino group-containing unsaturated compound in a relative amount of 0.2 mass% or less, with respect to all the structural units comprised in the acrylic adhesive polymer.

19. The adhesive composition according to claim 11 or 12, wherein the modified polymer is at least one species selected from the group consisting of an acid-modified polyolefin, a chlorinated polyolefin, an acid-modified chlorinated polyolefin, an acryl-modified polyolefin, and an acryl-modified chlorinated polyolefin.

20. The adhesive composition according to claim 11 or 12, further comprising a cross-linking agent.

21. A solvent-type adhesive composition which comprises an acrylic adhesive polymer, a modified polymer which is at least one species selected from the group consisting of a modified polyolefin and a modified polydiene, and a solvent, wherein
the adhesive layer comprising a thickness of 50 $\mu$m has a haze of 3.0% or higher, the adhesive layer being formed on a substrate by applying the adhesive composition onto the substrate and removing the solvent.

22. A decorative molded body, comprising the adhesive layer of the adhesive sheet according to claim 1 or 2 which adhesive layer is stuck to a mold body.

[Figure 1]

[Figure 2]

## INTERNATIONAL SEARCH REPORT

| International application No. |
|---|
| **PCT/JP2024/022465** |

| A. | CLASSIFICATION OF SUBJECT MATTER |
|---|---|

*C09J 7/38*(2018.01)i; *C09J 123/26*(2006.01)i; *C09J 133/04*(2006.01)i
FI:  C09J7/38; C09J133/04; C09J123/26

According to International Patent Classification (IPC) or to both national classification and IPC

| B. | FIELDS SEARCHED |
|---|---|

Minimum documentation searched (classification system followed by classification symbols)

C09J7/38; C09J123/26; C09J133/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | WO 2020/218359 A1 (NITTO DENKO CORPORATION) 29 October 2020 (2020-10-29) claims 1, 5-6, paragraphs [0006], [0008], [0024], [0027], [0032]-[0033], [0061]-[0062], table 1, example 5 | 1-8, 10-16, 18-21 |
| Y | | 9, 22 |
| A | | 17 |
| X | WO 2019/087816 A1 (SOKEN CHEMICAL & ENGINEERING CO., LTD.) 09 May 2019 (2019-05-09) claims 1, 4-5, paragraphs [0013], [0067], [0069], tables 2-3, example 5 | 1-3, 5-8, 11-13, 15-17, 19-20 |
| Y | | 9, 22 |
| A | | 4, 10, 14, 18, 21 |
| Y | WO 2022/064809 A1 (SOKEN CHEMICAL & ENGINEERING CO., LTD.) 31 March 2022 (2022-03-31) claim 1, tables 1, 3, examples 1-5 | 9, 22 |
| A | | 1-8, 10-21 |

| ✓ Further documents are listed in the continuation of Box C. | ✓ See patent family annex. |
|---|---|

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 August 2024** | **03 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| | International application No. |
|---|---|
| | **PCT/JP2024/022465** |

### C. DOCUMENTS CONSIDERED TO BE RELEVANT

| Category* | Citation of document, with indication, where appropriate, of the relevant passages | Relevant to claim No. |
|---|---|---|
| Y | JP 2017-132205 A (BANDO CHEMICAL INDUSTRIES, LTD.) 03 August 2017 (2017-08-03) claim 1, paragraph [0044], tables 1, 3, examples 1-13 | 9, 22 |
| A | | 1-8, 10-21 |

## INTERNATIONAL SEARCH REPORT
### Information on patent family members

International application No.

**PCT/JP2024/022465**

| Patent document cited in search report | | | Publication date (day/month/year) | Patent family member(s) | | | Publication date (day/month/year) |
|---|---|---|---|---|---|---|---|
| WO | 2020/218359 | A1 | 29 October 2020 | US claims 1, 5-6, paragraphs [0018], [0038], [0042], [0047], [0049], [0056], table 1, example 5 | 2022/0145140 | A1 | |
| | | | | EP | 3960444 | A1 | |
| | | | | CN | 113784839 | A | |
| | | | | TW | 202104501 | A | |
| | | | | JP | 2020-183518 | A | |
| WO | 2019/087816 | A1 | 09 May 2019 | US claims 1, 4-5, paragraph [0044], example 4, synthesis example 2, tables 2-3 | 2020/0270490 | A1 | |
| | | | | CN | 111247222 | A | |
| | | | | KR | 10-2020-0081397 | A | |
| WO | 2022/064809 | A1 | 31 March 2022 | EP claim 1, tables 1, 3, examples 1-5 | 4219123 | A1 | |
| | | | | CN | 116056864 | A | |
| JP | 2017-132205 | A | 03 August 2017 | (Family: none) | | | |

Form PCT/ISA/210 (patent family annex) (July 2022)

**REFERENCES CITED IN THE DESCRIPTION**

**Patent documents cited in the description**

- JP 2023101845 A

- WO 2020004355 A

**Non-patent literature cited in the description**

- **R. F. FEDORS**. *Polymer Engineering and Science*, 1974, vol. 14 (2), 147